(19) **Europäisches Patentamt**

**European Patent Office**

**Office européen des brevets**

(11) **EP 1 002 388 B1**

(12) **EUROPEAN PATENT SPECIFICATION**

(45) Date of publication and mention
of the grant of the patent:
**09.08.2006 Bulletin 2006/32**

(51) Int Cl.:
***H04H 1/00*** (2006.01)

(21) Application number: **98922203.9**

(22) Date of filing: **12.05.1998**

(86) International application number:
**PCT/US1998/009587**

(87) International publication number:
**WO 1998/053565 (26.11.1998 Gazette 1998/47)**

(54) **APPARATUS AND METHOD FOR EMBEDDING AND EXTRACTING INFORMATION IN ANALOG SIGNALS USING DISTRIBUTED SIGNAL FEATURES**

VORRICHTUNG UND VERFAHREN FÜR DIE EINBETTUNG UND WIEDERGEWINNUNG VON INFORMATIONEN IN ANALOGEN SIGNALEN MIT VERWENDUNG DER VERTEILTEN SIGNALMERKMALE

SYSTEME ET PROCEDE D'INTEGRATION OU D'EXTRACTION DE DONNEES DANS DES SIGNAUX ANALOGIQUES AU MOYEN DE CARACTERISTIQUES DE SIGNAL DISTRIBUEES

(84) Designated Contracting States:
**AT BE CH CY DE DK ES FI FR GB GR IE IT LI LU MC NL PT SE**

(30) Priority: **19.05.1997 US 858562**
**20.11.1997 US 974920**

(43) Date of publication of application:
**24.05.2000 Bulletin 2000/21**

(73) Proprietor: **Verance Corporation**
**San Diego, CA 92121 (US)**

(72) Inventors:
• **PETROVIC, Rade**
**Wilmington, MA 01887 (US)**
• **JEMILI, Kanaan**
**Woburn, MA 01801 (US)**
• **WINOGRAD, Joseph, M.**
**32 Fairmont Avenue**
**Cambridge, MA 02139 (US)**
• **METOIS, Eric**
**Somerville, MA 02144 (US)**

(74) Representative: **Tomlinson, Kerry John et al**
**Frank B. Dehn & Co.**
**St Bride's House**
**10 Salisbury Square**
**London EC4Y 8JD (GB)**

(56) References cited:
**GB-A- 2 260 246          GB-A- 2 292 506**
**US-A- 4 972 471**

**Description**

BACKGROUND OF THE INVENTION

Field of the Invention

This invention relates to apparatus and methods for encoding and decoding information in analog signals, such as audio, video and data signals, either transmitted by radio wave transmission or wired transmission, or stored in a recording medium such as optical or magnetic disks, magnetic tape, or solid state memory.

Background and Description of Related Art

An area of particular interest to certain embodiments of the present invention relates to the market for musical recordings. Currently, a large number of people listen to musical recordings on radio or television. They often hear a recording which they like enough to purchase, but don't know the name of the song, the artist performing it, or the record, tape, or CD album of which it is part. As a result, the number of recordings which people purchase is less than it otherwise would be if there was a simple way for people to identify which of the recordings that they hear on the radio or TV they wish to purchase.

Another area of interest to certain embodiments of the invention is copy control. There is currently a large market for audio software products, such as musical recordings. One of the problems in this market is the ease of copying such products without paying those who produce them. This problem is becoming particularly troublesome with the advent of recording techniques, such as digital audio tape (DAT), which make it possible for copies to be of very high quality. Thus it would be desirable to develop a scheme which would prevent the unauthorized copying of audio recordings, including the unauthorized copying of audio works broadcast over the airwaves. It is also desirable for copyright enforcement to be able to insert into program material such as audio or video signals digital copyright information identifying the copyright holder, which information may be detected by appropriate apparatus to identify the copyright owner of the program, while remaining imperceptible to the listener or viewer.

Various prior art methods of encoding additional information onto a source signal are known. For example, it is known to pulse-width modulate a signal to provide a common or encoded signal carrying at least two information portions or other useful portions. In U.S. Patent No. 4,497,060 to Yang (1985) binary data is transmitted as a signal having two differing pulse-widths to represent logical "0" and "1" (e.g., the pulse-width durations for a "1" are twice the duration for a "0"). This correspondence also enables the determination of a clocking signal.

U.S. Patent No. 4,937,807 to Weitz et al. (1990) discloses a method and apparatus for encoding signals for producing sound transmissions with digital information to enable addressing the stored representation of such signals. Specifically, the apparatus in Weitz et al. converts an analog signal for producing such sound transmissions to clocked digital signals comprising for each channel an audio data stream, a step-size stream and an emphasis stream.

With respect to systems in which audio signals produce audio transmissions, U.S. Patent Nos. 4,876,617 to Best et al. (1989) and 5,113,437 to Best et al. (1992) disclose encoders for forming relatively thin and shallow (e.g., 150 Hz wide and 50 dB deep) notches in mid-range frequencies of an audio signal. The earlier of these patents discloses paired notch filters centered about the 2883 Hz and 3417 Hz frequencies; the later patent discloses notch filters but with randomly varying frequency pairs to discourage erasure or inhibit filtering of the information added to the notches. The encoders then add digital information in the form of signals in the lower frequency indicating a "0" and in the higher frequency a "1". In the later Best et al. patent an encoder samples the audio signal, delays the signal while calculating the signal level, and determines during the delay whether or not to add the data signal and, if so, at what signal level. The later Best et al. patent also notes that the "pseudo-random manner" in moving the notches makes the data signals more difficult to detect audibly.

Other prior art techniques employ the psychoacoustic model of the human perception characteristic to insert modulated or unmodulated tones into a host signal such that they will be masked by existing signal components and thus not perceived. See, e.g. Preuss et al., U.S. Patent No. 5,319,735, and Jensen et al., U.S. Patent No. 5,450,490. Such techniques are very expensive and complicated to implement, while suffering from a lack of robustness in the face of signal distortions imposed by perception-based compression schemes designed to eliminate masked signal components.

The prior art fails to provide a method and an apparatus for encoding and decoding auxiliary analog or digital information signals onto analog audio or video frequency signals for producing humanly perceived transmissions (i.e., sounds or images) such that the audio or video frequency signals produce substantially identical humanly perceived transmission prior to as well as after encoding with the auxiliary signals. The prior art also fails to provide relatively simple apparatus and methods for encoding and decoding audio or video frequency signals for producing humanly perceived audio transmissions with signals defining digital information. The prior art also fails to disclose a method and apparatus for limiting unauthorized copying of audio or video frequency signals for producing humanly perceived audio transmissions.

GB-A-2292506 describes a prior art method for adding an encoded message to a sound signal. The preamble to the independent claims are based on this document. US-A-4972471 describes another prior art encoding system.

SUMMARY OF THE INVENTION

The present invention provides apparatus and methods for embedding or encoding, and extracting or decoding, digitized information in an analog host or cover signal in a way which has minimal impact on the perception of the source information when the analog signal is applied to an appropriate output device, such as a speaker, a display monitor, or other electrical/electronic device.

The present invention further provides apparatus and methods for embedding and extracting machine readable signals in an analog cover signal which can control the ability of a device to copy the cover signal.

According to a first aspect of the present invention, there is provided a method for embedding an information symbol in an analog cover signal, comprising the steps of:

> selecting a distributed signal feature of said cover signal;
> calculating a value of said selected distributed signal feature of said cover signal over a predefined region; and
> characterised by comprising the steps of:

> > comparing the calculated distributed signal feature value with a predefined set of quantization values corresponding to given information symbols and determining a target quantization value corresponding to the information symbol to be embedded;
> > calculating the amount of change required in the cover signal to modify said calculated distributed signal feature to said target quantization value; and
> > modifying said cover signal according to said calculated amount of change by generating a modified version of said cover signal in accordance with said calculated amount of change and embedding said modified version of said cover signal into the original cover signal to provide a modified cover signal having said information symbol embedded therein.

According to a second aspect of the present invention, there is provided a method for extracting an information symbol embedded in an analog cover signal, comprising the steps of:

> calculating a distributed signal feature value of said cover signal over a predefined region; and

characterised by comprising the steps of:

> comparing the calculated signal feature value with a predefined set of quantization values corresponding to given information symbols and determining which quantization value corresponds to the calculated signal feature value; and
> translating said determined quantization value into the information symbol contained in said cover signal and outputting said information symbol.

The present invention further provides apparatus for embedding information in accordance with the above method, and apparatus for extracting the embedded information from the cover signal.

In summary, in the present invention a data signal is encoded or embedded in an analog host or cover signal, by modulating the host or cover signal so as to modify a distributed feature of the signal within the predefined region. The distributed feature of the host signal is modified to a predefined quantization value which corresponds to a data symbol or binary digit of the data signal to be embedded. Subsequently, the embedded data signal is recovered by detecting the modified distributed feature values and correlating the detected values with the predefined relationship between data symbols and quantized distributed feature values.

The term cover.signal as used hereinafter refers to a host or source signal, such as an audio, video or other information signal, which carries-or is intended to carry embedded or hidden digitized data. The terms distributed feature or signal feature as used hereinafter refer to a scalar value obtained by processing the cover signal values over the totality of the regions within domains (i.e., time, frequency and/or space) where the data-embedding modulation is applied. One desirable property for such processing is that random changes in signal magnitudes caused by noise or other signal distortions have a minimal effect on the signal feature value, while the combined effect of modulation of signal magnitudes for embedding of digitized data over a predefined region produces a measurable change in the feature value.

BRIEF DESCRIPTION OF THE DRAWINGS

These and other aspects of the present invention will become more fully understood from the following detailed description of the preferred embodiments in conjunction with the accompanying drawings, in which:

FIG. 1 is a block diagram of an auxiliary information signal encoding and decoding process according to a first embodiment of the present invention;
FIG. 2 is a block diagram of one embodiment of the encoder 10 of Fig. 1;
FIG. 3 is a block diagram of one embodiment of the host modifying signal generator 11 of Fig. 2;
FIG. 4 is a block diagram of one embodiment of the host modifying signal component generator 111 of Fig. 3;
FIG. 5 is a block diagram of an alternate host modifying signal generator according to the first embodiment of the present invention;
FIG. 6 is a block diagram of one embodiment of decoder 20 of Fig. 1;
FIG. 7 is a block diagram of short-term autocorrelation generator 21 according to the first embodiment of the present invention;
FIG. 8 is a block diagram of an alternate decoder 20 of Fig. 1 according to the first embodiment of the present invention;
FIG. 9 is a block diagram of a data signal embedding and extracting circuit according to a second embodiment of the present invention;
FIG. 10 is a block diagram of one embodiment of the embeddor 10a of Fig. 9;
FIG. 11 is a block diagram of one embodiment of the embedded signal generator 11a of Fig. 10;
FIG. 12 is a block diagram of one embodiment of the data signal extractor 20a of Fig. 9; and
FIG. 13 is a table illustrating an example of specifications stego key 9 used for embedding and extracting digital data in an audio signal, according to the second embodiment of the invention.

DETAILED DESCRIPTION OF THE PREFERRED EMBODIMENTS

The present invention is directed to a method and apparatus for embedding information or data onto a cover signal, such as an audio signal, video signal, or other analog signal, by modulating or changing the value of a distributed feature of the cover signal in a selected region of the frequency, time and/or space domains of the cover signal. The information or data to be encoded is preferably a digital or digitized signal. The invention can implemented in a number of different ways, either by software programming of a digital processor, in the form of analog, digital, or mixed-signal integrated circuits, as a discrete component electronic device, or a combination of such implementations.

According to a first preferred embodiment of the invention, a method and apparatus are provided for encoding auxiliary information onto a host or source signal, such as an audio signal, video signal, or other data signal, by modulating or changing the short-term autocorrelation function of the host signal as a function of the auxiliary information over time, at one or more selected autocorrelation delays. The auxiliary information may be an analog or digital signal. The short-term autocorrelation function is obtained by multiplying a signal with a delayed version of itself, and integrating the product over a predefined integration interval.

The short-term autocorrelation function is modulated or changed by adding to the host signal a host modifying signal having a positive or negative correlation with the original host signal. The embedded signal is preferably a controllably attenuated version of the host signal which has been delayed or advanced (for purposes of the invention, an advance will be considered a negative delay) in accordance with the selected autocorrelation delay.

The autocorrelation function can be modulated using the entire host signal or only a portion of it. In the preferred embodiment, frequency bands, temporal and/or spatial regions of the host signal are chosen so as to minimize the disturbance to the host signal as it affects the perception of the signal's output (i.e., audio or video quality).

Multiple host modifying signal components can be added to the host signal in the same or different frequency bands and temporal and/or spatial regions by generating host modifying signal components with different autocorrelation delays. The multiple host modifying signal components can represent different auxiliary information to increase overall auxiliary information throughput, or can represent the same auxiliary information to increase the robustness or security of the auxiliary information signal transmission.

Security is enhanced by maintaining confidential the information concerning specific parameters of the host modifying signal, which would be known only to the encoder and decoder of the system. The host modifying signal components may also have autocorrelation delays which vary over time according to a predetermined sequence or pattern, referred to herein as a "delay hopping pattern."

**First Embodiment**

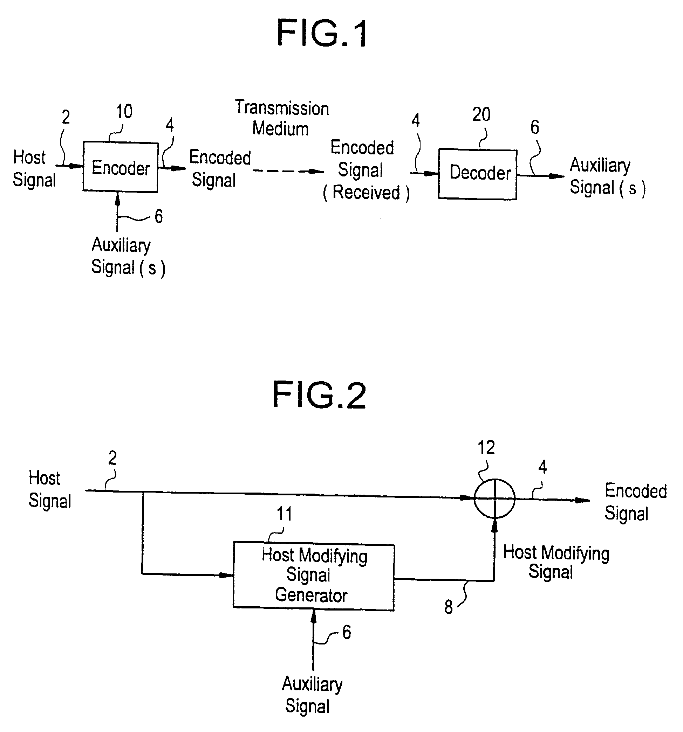

Referring now to the drawings, Fig. 1 shows a block diagram of the overall system according to a first embodiment of the invention. The system comprises an encoder 10 for encoding a host signal 2 (such as an audio or video program or source signal) with an auxiliary information signal 6, to produce an encoded signal 4. The encoded signal 4 may be transmitted over a communication medium, channel or line, or may be stored on a storage medium such as magnetic tape, optical memory, solid state memory, or electromagnetic memory, and also may be further processed such as by filtering, adaptive gain control, or other signal processing techniques, without impairing or degrading the encoded auxiliary information. The encoded signal 4 is then decoded in a decoder 20 to retrieve the auxiliary information signal 6.

Fig. 2 shows a detail of a first implementation of the encoder 10 of the first embodiment in which the host signal is modified by a single host modifying signal 8, produced by a host modifying signal generator 11 which receives the host signal 2 and the auxiliary information signal 6. The host modifying signal is added to the host signal in an adder 14 to provide the encoded signal 4.

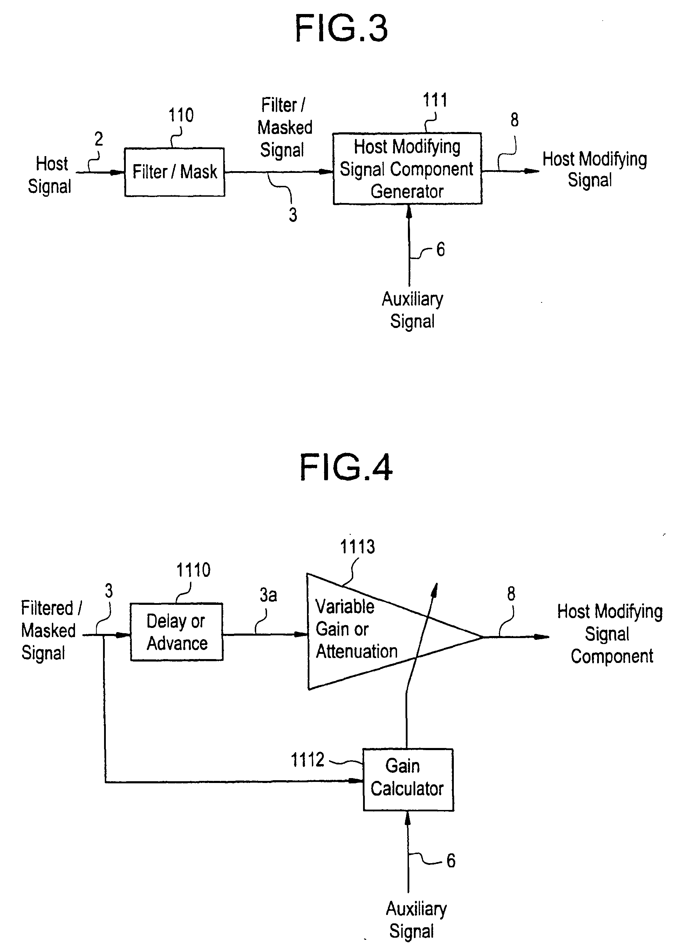

The host modifying signal is obtained as shown in Fig. 3, which illustrates one embodiment of the host modifying signal generator 11. In this embodiment, the host signal 2 is filtered and/or masked by a filter/mask 110. The filter/mask 110 modifies the frequency, period, or spatial content of the host signal in such manner to cause minimal disturbance to the output characteristics of the host signal when applied to an output device such as a speaker or a video monitor. It is also possible for the filter/mask to pass the host signal unchanged, in which case the filtered/masked signal 3 would be equal to the host signal 2. The signal 3 is then inputted to a host modifying signal component generator 111, wherein it is modified according to an input auxiliary information signal 6, to produce a host modifying signal 8. The details of the host modifying signal component generator 111 are shown in Fig. 4.

As shown, the filtered host signal 3 is inputted to a delay/advance circuit 1110 to produce a delayed/advanced signal 3a. The signal 3 is also inputted to a gain calculator 1112 along with auxiliary information signal 6. The purpose of the gain calculator 1112 is to calculate the gain of variable gain or attenuation circuit 1113 which is to be applied to delayed signal 3a in order to obtain the host modifying signal 8. The amount of delay (or advancement) applied by delay/advance circuit 1110 corresponds to the autocorrelation delay at which the host signal is being modulated.

The amount of gain applied to the signal 3a at any time or spatial region is determined by the gain calculator 1112 as a function of the values of the auxiliary information signal 6 and the filtered signal 3. The short-term autocorrelation of the filtered signal 3 can be expressed by the formula

$$R(t,\tau) = \int_{t-T}^{t} s(x)s(x-\tau)\,dx \qquad (1)$$

where s(t) is the filtered signal 3, R(t, $\tau$) is the short-term autocorrelation of s(t), $\tau$ is the delay at which the autocorrelation is evaluated, T is the integration interval, and t is time.

By adding a host modifying signal e(t) to the filtered signal s(t), the autocorrelation function R(t, $\tau$) is modulated to obtain a modulated autocorrelation function $R_m$(t, $\tau$):

$$R_m(t,\tau) = \int_{t-T}^{t} (s(x)+e(x))(s(x-\tau)+e(x-\tau))\,dx$$

$$= R(t,\tau) + \int_{t-T}^{t} (s(x)+e(x-\tau)+e(x)(s(x-\tau)+e(x)e(x-\tau))\,dx \qquad (2)$$

By appropriately selecting the host modifying signal e(t), an increase or decrease of the short-term autocorrelation function can be achieved. It will be apparent that many different types of host modifying signals may be used to achieve this modulation. In the preferred embodiment, delayed or advanced versions of the host signal multiplied by a selected amount of gain or attenuation are used as the host modifying signal e(t). Specifically,

$$e(t) = gs(t-\tau) \qquad (3a)$$

or

$$e(t)=gs(t+\tau) \qquad\qquad (3b)$$

Substituting equations (3a) and (3b) respectively into equation (2), it is seen that the short-term autocorrelation of the resulting modified signal can be written as

$$R_m(t,\tau)=R(t,\tau)+gR(t,2\tau)+gR(t-\tau,0)+g^2R(t-\tau,\tau) \qquad (4a)$$

or

$$R_m(t,\tau)=R(t,\tau)+gR(t,0)+gR(t+\tau,2\tau)+g^2R(t+\tau,\tau) \qquad (4b)$$

The autocorrelation functions $R(t,\tau)$ of the host signal which appear on the right hand side of equations (4a) and (4b) can be measured, and their values used to obtain the solution for gain g that will produce a desired value for the modulated autocorrelation function $R_m(t,\tau)$. It is typically desired to have small values for g so as to keep the host modifying signal transparent to the perceiver of the host signal. If this is the case, the $g^2$ terms in equations (4a) and (4b) can be ignored as negligible, such that the exact gain value can be closely approximated by

$$g\approx\frac{R_m(t,\tau)-R(t,\tau)}{R(t,2\tau)+R(t-\tau,0)} \qquad\qquad (5a)$$

or

$$g\approx\frac{R_m(t,\tau)-R(t,\tau)}{R(t,0)+R(t+\tau,2\tau)} \qquad\qquad (5b)$$

respectively. While the present invention is equally applicable to the encoding of analog auxiliary information signals, the following discussion assumes the auxiliary information signal is a digital signal having values taken from an M-ary set of symbols $d_i \in \{\pm1,\pm3, ... \pm(2M\text{-}1)\}$, for i=1,2,3,... which are transmitted at times $t = iT_s$, where $T_s$ denotes the symbol interval or period. According to the first preferred embodiment of the invention, each auxiliary information symbol is associated with a corresponding value of the short-term autocorrelation function. One way to map the symbols onto the autocorrelation function value domain while keeping the host modifying signal small with respect to the host signal, is to employ the formula

$$R_m(iT_s,\tau)=\xi d_i R_m(iT_s,0) \qquad\qquad (6)$$

where $\xi$ is a small quantity selected to balance the requirement of signal robustness with the requirement that the host modifying signal be transparent to the perceiver. By inserting equations (4a) and (4b) respectively into equation (6), a quadratic equation for g is obtained, the solution of which provides the appropriate gain $g_i$ for the symbol transmitted at time $t = iT_s$. Alternatively, approximate values for $g_i$ can be obtained using formulas (5a) or (5b). The gain is held constant over the symbol interval in order to minimize any errors. Further deviation of $g_i$ from its desired value can be used at the boundaries of the symbol interval to avoid abrupt changes in the host modifying signal which might jeopardize the requirement for host modifying signal transparency. Modulation error caused by such smoothing does not significantly degrade the performance of the encoding system. The integration interval T should be shorter than $T_s\text{-}\tau$ in order to

minimize intersymbol interference. However, certain overlap between adjacent symbols can be tolerated in order to increase the auxiliary channel bandwidth.

In an alternative implementation, the gain calculator 1112 may map a fixed gain to be applied to the filtered/masked and delayed/advanced signal 3a according to only the value of the auxiliary information signal 6. According to this implementation, the gain calculator ignores the value of the signal 3, and as such the input line for signal 3 may be omitted. In this embodiment, the gain calculator will apply a fixed amount of gain depending on the value of the auxiliary signal 6. For example, in the instance where the auxiliary signal is a binary signal, the gain calculator could apply a predetermined positive gain for an auxiliary signal of "0" and a predetermined negative gain for an auxiliary signal of "1". This approach will enable the encoder to have reduced complexity; however, it requires a larger modifying signal to obtain the same performance characteristics in terms of bit-error rate or signal robustness.

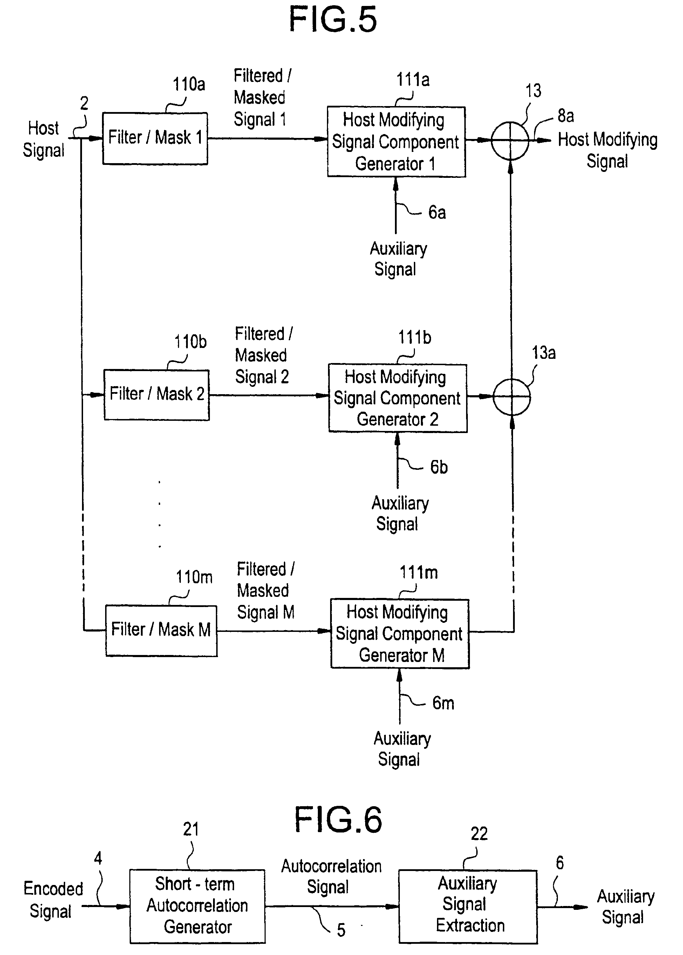

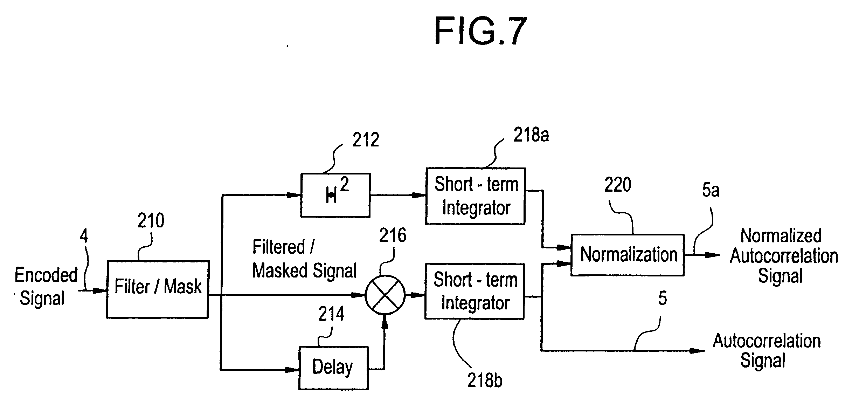

In order to recover the auxiliary information signal 6 from the encoded signal 4, the encoded signal is applied to a decoder 20. Details of one embodiment of the decoder 20 are shown in Fig. 6. According to this embodiment, the decoder consists of a short-term autocorrelation generator 21 and an auxiliary signal extraction circuit 22. As shown in Fig. 7, the short-term autocorrelation generator 21 includes a filter/mask 210 which filters and/or masks the encoded signal 4, and then obtains an autocorrelation signal by applying the filtered encoded signal to a squaring circuit 212, a delay circuit 214, and a multiplier 216. The output of the squaring circuit 212 and the output of the multiplier 216 are applied to short-term integrators 218a and 218b. The output of integrator 218b is an autocorrelation signal 5. The outputs of integrators 218a and 218b are also applied to a normalization circuit 220, to produce a normalized autocorrelation signal 5a. The filter/mask 210 can have the same characteristics as the filter/mask 110 of the encoder (or may be different), and in some circumstances may be omitted entirely. The delay circuit 214 uses the same delay $\tau$ as used in the delay/advance circuit 1110 of the encoder. The squaring circuit 212 calculates the square of the filtered encoded signal, which is the same as calculating the short-term autocorrelation with a delay of zero and integrating over interval T. The normalization circuit 220 outputs a normalized autocorrelation signal d(t), which is equal to:

$$d(t) = \frac{R_m(t, \tau)}{R_m(t, 0)} \qquad\qquad (7)$$

In the special case where the auxiliary signal is in the form of binary data, the information symbols can be recovered by determining the sign (+ or -) of $R_m(t, \tau)$ at the individual sampled symbol intervals, and thus it would be unnecessary to calculate the zero delay autocorrelation and the normalized autocorrelation signal.

The auxiliary information signal is obtained from the normalized autocorrelation signal by the auxiliary signal extraction circuit 22. In the absence of signal distortion, d(t) has values at discrete points in time separated by $T_s$ that are directly proportional to the magnitude of the input symbols. Signal extraction may be performed by one or more well known techniques in the art of digital communications, such as filtering, masking, equalization, synchronization, sampling, threshold comparison, and error control coding functions. Such techniques being well known, they will not be further elaborated upon.

According to a second implementation, each auxiliary data symbol may be associated with a set of short-term autocorrelation values, the particular set being chosen so as to minimize the value of g based upon the value of the auxiliary data symbol. As an example, for a binary-valued auxiliary signal, the bit transmitted at time $iT_s$ is associated with the set of autocorrelation values $2j\xi R_m(iT_s, 0)$ for j=0, $\pm 1$, $\pm 2$, ... etc. if it is a "1", or the set $(2j-1)\xi R_m(iT_s, 0)$ for j=0, $\pm 1$, $\pm 2$, ... etc. if it is a "0". The value of j for each bit is selected to minimize the magnitude of g obtained through solution of equations (4a) or (4b). Alternatively, approximate calculation can be performed by using equations (5a) or (5b) if j is chosen so that the value is nearest to $R(t,\tau)$. In this embodiment, the decoder operates in the same way as in the first implementation, except that multiple autocorrelation values are mapped to the same auxiliary information symbol.

According to a third implementation, the auxiliary information symbols are encoded as a difference in short-term autocorrelation functions at predefined time instances. For example, the symbol interval is divided into two equal parts and the autocorrelation function is determined for each part. The difference between the two autocorrelation functions is then changed so as to represent the auxiliary data. If the data symbol at $iT_s$ is $d_i \in \{\pm 1, \pm 3, ... \pm (2M-1)\}$, for $i$=1,2,3,..., then the desired difference can be expressed by

$$R_m(iT_s, \tau) - R_m((i+0.5)T_s, \tau) = \xi d_i R_m(iT_s, 0) \qquad\qquad (8)$$

where $\xi$ is a small quantity determined to balance the robustness/transparency requirements. Substituting equations (4a) or (4b) into equation (8) produces a quadratic equation for g which can be solved to obtain the value of g which is applied to the host modifying signal in the first half of the symbol interval. Gain equal in magnitude but opposite in sign (polarity) is applied to the host modifying signal in the second half of the symbol interval. To minimize intersymbol interference the integration interval should be shorter than $(T_s/2)$-$\tau$. A small amount of interference may be tolerated to obtain an increase in bit rate.

According to another implementation, the host modifying signal is composed of a sum of multiple auxiliary information signal components, obtained according to the encoder shown in Fig. 5. Here, a plurality of filter/mask 110a-110m provide a plurality of host signals to a plurality of host modifying component generators 111a-111m, which are added together in adders 13, 13a, etc. to produce a host modifying signal 8a. In this embodiment, M auxiliary signal components are generated by using differing amounts of delay in each of the component generators. The auxiliary signals 6a-6m can each be different, or may be the same in order to increase robustness and security level. A restriction is that for any two component generators having equal amounts of delay, and appearing in the same or overlapping frequency bands, time intervals or spatial masks, the auxiliary signals must be the same. In this instance the preferred host modifying signals take the form:

$$e(t) = \sum g_m s(t - \tau_m) \qquad (9)$$

where $\tau_m$ and $g_m$ represent the delay and gain for the mth host modifying symbol component. By substituting equation (9) into equation (2), the following is obtained:

$$R_m(t, \tau) = R(t, \tau) + \sum_{m=1}^{M} g_m (R(t, \tau_m + \tau) + R(t - \tau, \tau_m - \tau)) + \sum_{m1=1}^{M} \sum_{m2=1}^{M} g_{m1} g_{m2} R(t - \tau_{m1}, \tau + \tau_{m2} - \tau_{m1}) \qquad (10)$$

For a random signal s(t), and sufficiently large $\tau$, $R(t,\tau)$ is much smaller than $R(t,0)$. Therefore the set of delays $\{\tau_m\}$ should be chosen such that $R_m(t,\tau)$ calculated for $\tau = \pm\tau_m$ according to equation (10) has only one term for which the short-term autocorrelation delay is equal to zero. This term will have dominant effect on the modulation of the $R_m(t,\tau_m)$. As different $\tau_m$ are chosen, different terms in equation (10) become dominant in the summation, effectively "tuning" different host modifying components.

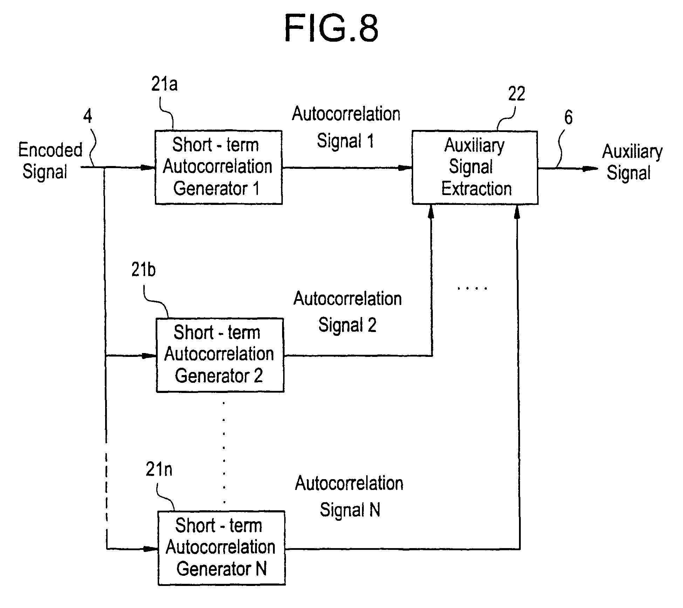

The decoder associated with this embodiment is shown in Fig. 8. The decoder includes a number of short-term autocorrelation generators 21a-21n, one for each delay amount for which a host modifying signal component was generated. The generated autocorrelation signals are processed together by auxiliary signal extraction circuit 22 and are either combined to obtain the auxiliary signal or independently processed to extract a multiplicity of auxiliary information signals.

According to a fifth implementation according to the first embodiment of the invention, the host modifying signal components may change their corresponding autocorrelation delay amounts $\tau$ over time according to a predefined delay pattern referred to as "delay hopping." The security of the auxiliary signal is enhanced by maintaining the delay hopping pattern secret. The hopping pattern can be defined as a list of consecutive autocorrelation delays and their duration. An authorized decoder needs to know the hopping pattern as well as the filtering/masking parameters and signaling parameters (symbol duration and other symbol features). Multiple auxiliary signals can be carried simultaneously in the host signal if their hopping patterns are distinct, even if other filtering/masking and signalling parameters are the same.

The first embodiment of the invention as described above may be modified in many ways as would become apparent to those skilled in the art from reading the present description. For example, in the above description of the first preferred embodiment of the invention, reference has been made to the perception of the host signal by a "perceiver." In the context of the invention, a perceiver may be a device such as a computer, radar detector, or other electrical/electronic device in the case of host signal being communication signals, as well as a human in the case of audio or video host signals. Further, the implementation of the invention can be carried out using analog circuitry as well as digital circuitry such as ASICs (Application Specific Integrated Circuits), general purpose digital signal processors, microprocessors and equivalent apparatus. Further, it is possible for the characteristics of the filter/mask to change over time according to a predefined pattern which may have characteristic changes of varying duration. Finally, it is noted that a function similar to that of the present invention may be obtained under some circumstances using transform-domain processing techniques (such as Fourier or cepstral domain) which may be implemented using known algorithms such as the Fast Fourier Transform or FFT.

## Second Embodiment

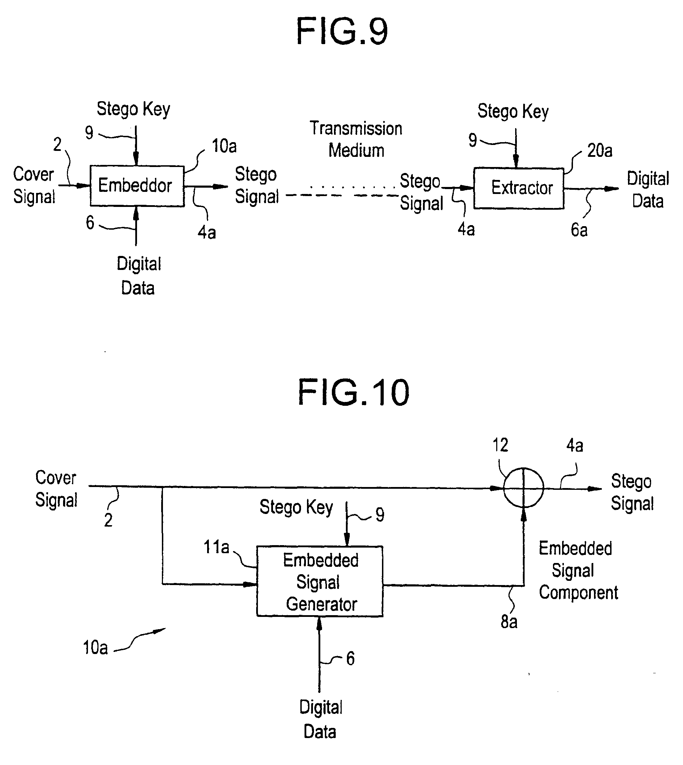

Referring to Fig. 9, according to a second preferred embodiment, the invention employs an embeddor 10a to generate a stego signal 4a, which is substantially the same in terms of the content and quality of information carried by a cover signal 2. For instance, where cover signal 2 is a video or audio signal, the stego signal 4a will produce essentially the same video or audio program or information when applied to an output device such as a video display or loudspeaker.

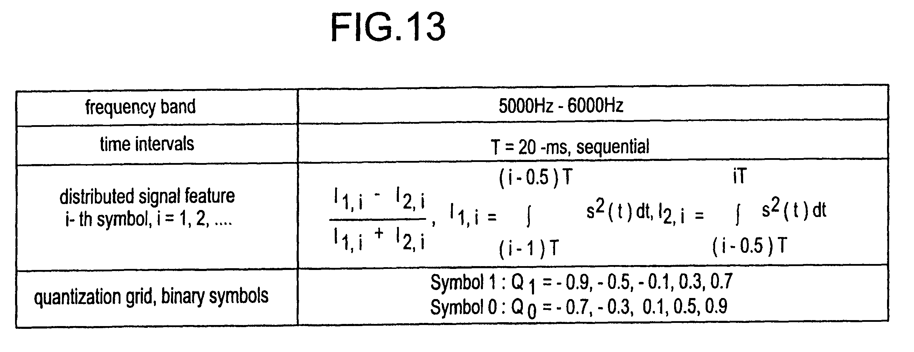

A stego key 9 is used to determine and specify the particular region of the time, frequency and/or space domain of the cover signal 2 where the digital data 6 is to be embedded, as well as the distributed feature of the cover signal to be modified and the grid or table correlating digital data values with distributed feature quantization levels. For example, in the case of an audio signal, a particular frequency band and time interval define a region for embedding a data symbol. For a video signal, an embedding region is specified by a frequency band, a time interval in the form of an image field, frame or series of frames, and a particular area within the field or frame. FIG. 13 shows an example of the stego key specifications for frequency band, time interval, distributed signal feature, and symbol quantization grid, for an audio cover signal. Specific examples of distributed signal features are provided below.

The embeddor then appropriately modulates or modifies the cover signal 2 to obtain a stego signal 4a. Stego signal 4a can be transmitted, or stored in a storage medium such as magnetic tape, CD-ROM, solid state memory, and the like for later recall and/or transmission. The embedded digital data is recovered by an extractor 20a, having knowledge of or access to the stego key 9, which operates on the stego signal 4a to extract the digital data 6.

Fig. 10 shows a block diagram of one embodiment of the embeddor 10a As shown, the cover signal 2, stego key 9, and digital data 6 are inputted to an embedded signal generator 11a. The embedded signal generator modulates or modifies a predefined distributed feature of the cover signal 2 in accordance with the stego key 9 and digital data 6, and generates an embedded signal 8a. The cover signal 2 is then modified by adding the embedded signal 8a to the cover signal in an adder 12, to produce the stego signal 4a.

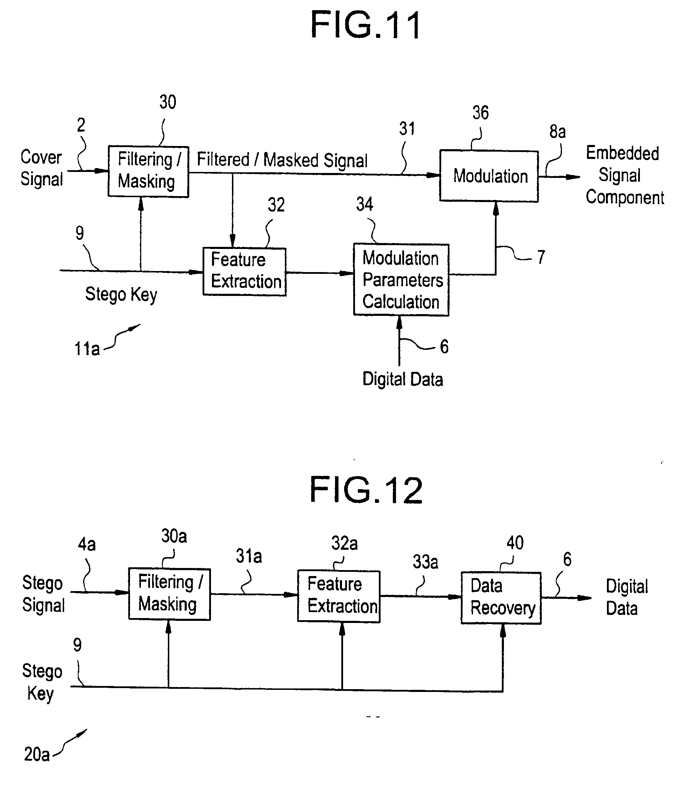

Fig. 11 illustrates the details of an embedded signal generator 11a used to generate a single embedded data signal. The cover signal 2 is filtered and/or masked in filtering/masking block 30 to produce a filtered/masked signal 31. The filtered/masked signal 31 is comprised of the selected regions of the cover signal, as specified by stego key 9, which are then used for embedding of data symbols. The signal 31 is then inputted to a feature extraction block 32, where the distributed feature to be modified, as specified by stego key 9, is extracted and provided to modulation parameter calculation module 34. Module 34 receives digital data 6 to be embedded in the cover signal, and determines the amount of modulation of the feature necessary to cause the feature to become approximately equal to the quantization value which corresponds to the digital data symbol or bit to be embedded. The calculation result 7 is then applied to modulation module 36, which modifies the filtered signal 31 to obtain the appropriate embedded signal component 8. The embedded signal component 8 is then added to the cover signal in adder 12 as shown in Fig. 10, to obtain the stego signal 4a.

It is further possible to embed multiple digital data signals in the cover signal 2, by using multiple embedded signal generators, each using a different stego key to modify a different feature of the cover signal and/or to use different regions of the cover signal, so as to produce multiple embedded signal components each of which are added to the cover signal 2. Alternatively, the different data signals may be embedded in a cascade fashion, with the output of one embeddor becoming the input of another embeddor using a different stego key.

According to an alternate embodiment, the filtering/masking module 30 may be eliminated. In this case, the cover signal is directly modified by the embedded signal generator to produce the stego signal. Accordingly, the adder 12 of Fig. 10 would not be required in this alternate embodiment.

A block diagram of an extractor 20a used to recover the digital data embedded in the stego signal is shown in Fig. 12. The stego signal is filtered/masked in filter/mask module 30a to isolate the regions where the digital data is embedded. The filtered signal 31a is inputted to feature extraction module 32a where the feature is extracted. The extracted feature 33a is then inputted to data recovery module 40 where the extracted feature is mapped to the quantization table or grid correlating quantized ' feature values with specific data symbols. A multiplicity of extracted data symbols is then subjected to well-known error detection, error correction, and synchronization techniques to verify the existence of an actual message and proper interpretation of the content of the message. Specific examples of cover signal distributed feature modulation to embed data are given hereinafter.

## First Example

In this example, the cover signal 2 is an audio signal. In this embodiment, the audio signal is first filtered to isolate a specific frequency band to be used for embedding a particular data message, to produce a filtered audio signal s(t). Other frequency bands can be used to embed other messages, either concurrently or in a cascaded processing technique. In addition, restricting the frequency band to be modulated to only a fraction of the overall signal spectrum reduces the effect of such modulation on the host or cover signal. The filtering step may be omitted, however, without affecting either the efficiency of the embedding process or the robustness of the embedded data.

Next, a function f(s(t)) of the filtered audio signal s(t) is calculated as follows:

$$f(s(t)) = abs^{\alpha}(s(t)) \tag{11}$$

where abs( ) denotes an absolute value calculation, and $\alpha$ is a parameter. Systems using $\alpha=1$ and $\alpha=0.5$ have been successfully implemented by the present inventors.

Next, the function f(s(t)) is integrated over successive time intervals of length T to obtain:

$$I_i = \int_{(i-1)T}^{iT} f(s(t))dt \tag{12}$$

where the interval T corresponds to the duration of a symbol.

In the fourth step, the distributed feature $F_i$ for the i-th symbol is calculated according to the following:

$$F_i = \frac{I_i}{\sum_{n=1}^{N} I_{i-n}(1+g_{j-n})^{\alpha}} \tag{13}$$

where $g_j$, j=1, 2, ..., N are gain values calculated for N previous symbols, as shown below.

In the next step, the feature value $F_i$ is compared to a set of quantization levels belonging to a particular symbol, as defined by the stego key 9. The quantization level nearest to $F_i$ is determined. For example, in the case of binary digits, there are two sets, $Q_0$ and $Q_1$, corresponding to bits "0" and "1" respectively. The set of quantization levels for each set $Q_0$ and $Q_1$ are defined as:

$$Q_0 = q(2\kappa\epsilon), \quad \kappa = 0, 1, 2, \ldots \tag{14}$$
$$Q_1 = q((2\kappa+1)\epsilon), \quad \kappa = 0, 1, 2, \ldots$$

where $\epsilon$ is the quantization interval that determines the robustness/transparency tradeoff, while q(x) is a monotonic function. Systems using q(x)=x and q(x)=log(x) have been successfully implemented.

Next, the gain value $g_i$ to be applied in the i-th symbol interval is calculated according to:

$$g_i = (Q_i/F_i)^{1/\alpha} - 1 \tag{15}$$

where $Q_i$ is the nearest element of the quantization set belonging to the i-th symbol.

In the following step, the gain $g_i$ is applied to all signal amplitudes in the i-th symbol interval and the result is added back into the audio cover signal. Alternatively, this gain can be applied fully only in the middle portion of the symbol interval, and being tapered off toward the ends of the symbol interval. This approach reduces perception of the signal modification at the expense of a slight reduction in symbol robustness.

In order to extract the embedded data, the extractor first filters the stego signal in the same manner as the embeddor, which is defined by the stego key 9. Next, the feature is calculated according to equations (11) to (13), where it is assumed that the time interval T is known in advance as specified by the stego key 9, and the beginning of the embedded message coincides with the start of the extracting process.

In the next step, the embedded data symbols are extracted by mapping the calculated feature values to the quantization table or grid as defined by equation (14) (provided by the stego key 9), finding the closest match, and translating the quantization value into the corresponding symbol.

In the following step, consecutive extracted symbols are strung together and compared with a set of possible messages. If a match is found, the message is outputted to a user, or to a higher data protocol layer. If no match is found, repeated attempts at extraction are performed, by slightly shifting the starting time of the message by dT, which is a small fraction of the interval T (e.g., 0.01T to 0.1T).

Second Example

In this example, after a filtering/masking step similar to the first example, a function f(s(t)) of the filtered audio signal s(t) is calculated according to the following:

$$f(s(t)) = s^{2m}(t) \tag{16}$$

where m is an integer. Systems using m=1 and m=2 have been successfully implemented.

Next, two integrals are respectively generated over the first half and the second half of the i-th symbol interval:

$$I_{1,i} = \int_{(i-1)T}^{(i-0.5)T} f(s(t))\,dt, \qquad I_{2,1} = \int_{(i-0.5)T}^{iT} f(s(t))\,dt \tag{17}$$

In the following step, the distributed feature $F_i$ for the i-th symbol is calculated according to:

$$F_i = \frac{I_{1,i} - I_{2,1}}{I_{1,i} + I_{2,1}} \tag{18}$$

Next, the calculated feature $F_i$ is compared to a predefined set of quantization values for the given symbol to be embedded, and the nearest quantization value is chosen. In this embodiment, the sets $Q_0$ and $Q_1$ of quantization values for binary digit symbols "0" and "1" are defined as:

$$Q_0 = q((2\kappa + 0.5)\epsilon), \quad \kappa = 0, \pm 1, \pm 2, \ldots \tag{19}$$
$$Q_1 = q((2\kappa - 0.5)\epsilon), \quad \kappa = 0, \pm 1, \pm 2, \ldots$$

where $\epsilon$ is the quantization interval that determines the robustness/transparency tradeoff, while q(x) is a monotonic function. Successful implementations have been performed for q(x)=x and q(x)=x+e/2.

In the next step the gain $g_i$ to be applied in the i-th symbol interval is calculated according to:

$$g_i = \frac{1}{2m} \frac{Q_i - F_i}{1 - Q_i F_i} \tag{20}$$

where $Q_i$ is the nearest element of the quantization set belonging to the i-th symbol. Equation (20) is derived as an approximation that holds well for small values of $g_i$ and reduces the amount of computation with respect to an exact formula, with negligible effects on system robustness.

Next, the calculated gain $g_i$ is applied to all signal amplitudes in the i-th symbol interval and the result is added back into the cover signal. Alternatively, the gain is applied fully only in the middle portion of the interval, and is tapered toward the ends of the interval.

The extractor process follows an analogous sequence to that described above for the first example.

The invention having been thus described, it will be apparent to those skilled in the art that the same may be varied in many ways without departing from the scope of the invention which is defined by the following claims. Any and all such modifications as would be apparent to those skilled in the art are intended to be covered by the following claims.

## Claims

1. A method for embedding an information symbol in an analog cover signal (2), comprising the steps of:

    selecting a distributed signal feature of said cover signal;
    calculating a value of said selected distributed signal feature of said cover signal over a predefined region; and
    **characterised by** comprising the steps of:

    comparing the calculated distributed signal feature value with a predefined set of quantization values corresponding to given information symbols and determining a target quantization value corresponding to the information symbol to be embedded;
    calculating the amount of change required in the cover signal to modify said calculated distributed signal feature to said target quantization value; and
    modifying said cover signal according to said calculated amount of change by generating a modified version (8; 8a) of said cover signal in accordance with said calculated amount of change and embedding said modified version of said cover signal into the original cover signal to provide a modified cover signal (4; 4a) having said information symbol embedded therein.

2. A method according to claim 1, wherein the step of calculating a distributed signal feature comprises the steps of determining a region of said cover signal in which to embed said information symbol, isolating said region of said cover signal, and calculating said signal feature value from said isolated region.

3. A method according to claim 1, wherein said predefined set of quantization values contains a multiplicity of quantization values for each defined information symbol.

4. A method according to claim 1, wherein the step of modifying said cover signal comprises the step of producing an embedded signal component (8a) according to said calculated amount of change for addition to said cover signal.

5. A method according to claim 1, wherein said predefined region contains a selected interval in the time domain of the cover signal.

6. A method according to claim 1, wherein said predefined region contains a selected frequency band of the cover signal.

7. A method according to claim 1, wherein the step of modifying comprises the step of altering at least some of the amplitudes of cover signal components within said predefined interval in accordance with said calculated amount of change.

8. A method according to claim 1, wherein the step of modifying comprises the step of altering the amplitudes of all cover signal components within said predefined interval in accordance with said calculated amount of change.

9. A method for extracting an information symbol embedded in an analog cover signal, comprising the steps of:

    calculating a distributed signal feature value of said cover signal over a predefined region; and

    **characterised by** comprising the steps of:

    comparing the calculated signal feature value with a predefined set of quantization values corresponding to given information symbols and determining which quantization value corresponds to the calculated signal feature value; and
    translating said determined quantization value into the information symbol contained in said cover signal and outputting said information symbol.

10. A method according to claim 9, wherein the step of calculating a distributed signal feature comprises the steps of determining a region of said cover signal in which to encode said information symbol, isolating said region of said cover signal, and calculating said signal feature value from said isolated region.

11. A method according to claim 9, wherein said predefined set of quantization values contains a multiplicity of quantization values for each defined information symbol.

12. A method according to claim 9, wherein said predefined region contains a selected interval in the time domain of the cover signal.

13. A method according to claim 9, wherein said predefined region contains a selected frequency band of the cover signal.

14. Apparatus for embedding and extracting information symbols in an analog cover signal (2), comprising:

   means (32) for calculating a distributed signal feature value of a selected distributed signal feature of said cover signal over a predefined region; and

   **characterised by** comprising:

   means (34) for comparing the calculated distributed signal feature value with a predefined set of quantization values corresponding to given information symbols and determining a target quantization value corresponding to the information symbol to be embedded;
   means (34) for calculating the amount of change required in the cover signal to modify said calculated distributed signal feature to said target quantization value;
   means (36, 12) for modifying said cover signal according to said calculated amount of change by generating a modified version (8; 8a) of said cover signal in accordance with said calculated amount of change and embedding said modified version of said cover signal into the original cover signal to provide a modified cover signal (4; 4a) having said information symbol embedded therein;
   means (32a) for calculating a distributed signal feature value of said modified cover signal over a predefined region;
   means (32a) for comparing the calculated signal feature value of said modified cover signal with a predefined set of quantization values corresponding to given information symbols and determining which quantization value corresponds to the calculated signal feature value; and
   means (40) for translating said determined quantization value into the information symbol contained in said modified cover signal and outputting said information symbol.

15. Apparatus according to claim 14, wherein said means (32) for calculating a distributed signal feature comprises means for determining a region of said cover signal in which to encode said information symbol, means for isolating said region of said cover signal; and means for calculating said signal feature from said isolated region.

16. Apparatus according to claim 14, wherein said predefined set of quantization values contains a multiplicity of quantization values for each defined information symbol.

17. Apparatus according to claim 14, further comprising means (36) for producing an embedded signal component for addition to said cover signal, according to the calculated amount of change.

18. Apparatus according to claim 14, wherein said predefined region contains a selected interval in the time domain of the cover signal.

19. Apparatus according to claim 14, wherein said predefined region contains a selected frequency band of the cover signal.

20. Apparatus according to claim 14, wherein said means (36) for modifying comprises means for altering at least some of the amplitudes of cover signal components within said predefined region in accordance with said calculated amount of change.

21. Apparatus for embedding an information symbol in an analog cover signal (2), comprising:

means (32) for calculating a distributed signal feature value of a selected distributed signal feature of said cover signal over a predefined region; and

**characterised by** comprising:

means (36, 12) for modifying said cover signal by altering at least some of the amplitudes of cover signal components within said predefined region as a function of said calculated distributed signal feature value so as to obtain a modified cover signal having a; distributed signal feature value in said predefined region corresponding to said information symbol.

22. Apparatus as set forth in claim 21, further comprising:

means (34) for comparing the calculated signal feature value with a predefined set of quantization values corresponding to given information symbols and determining a target quantization value corresponding to the information symbol to be embedded; and
means (34) for calculating the amount of change required in the cover signal to modify said calculated signal feature to said target quantization value; wherein
said means (36, 12) for modifying said cover signal modifies said cover signal according to said calculated amount of change.

23. Apparatus for extracting an information symbol embedded in an analog cover signal, comprising:

means (32a) for calculating a distributed signal feature value of said cover signal over a predefined region; and
**characterised by** comprising:

means (32a) for comparing the calculated signal feature value with a predefined set of quantization values corresponding to given information symbols and determining which quantization value corresponds to the calculated signal feature value; and
means (40) for translating said determined quantization value into the information symbol contained in said cover signal and outputting said information symbol.

24. A method for embedding information symbols onto an analog cover signal according to claim 1, wherein the step of calculating a distributed signal feature value comprises the step of determining a short-term autocorrelation function value of said cover signal;
said step of comparing comprises the step of calculating a value of the short-term autocorrelation function of said cover signal corresponding to said target quantization value of said information signal according to a predefined relationship between information signal value and cover signal autocorrelation value;
said step of calculating comprises the step of developing a cover modifying signal for modifying said cover signal such that the short-term autocorrelation function value of the modified cover signal will correspond to said calculated value; and
said step of modifying comprises the step of modifying said cover signal with said cover modifying signal.

25. A method for embedding information symbols onto an analog cover signal according to claim 24, wherein said cover modifying signal (8) is developed from said cover signal (2).

26. A method for embedding information symbols onto an analog cover signal according to claim 24, wherein the step of modifying said cover signal comprises the step of adding said cover modifying signal to said cover signal.

27. A method for embedding information symbols onto an analog cover signal according to claim 25, wherein the step of developing comprises varying the gain of said cover signal as a function of said predefined relationship and the values of said cover signal and said auxiliary information signal (6).

28. A method for embedding information symbols onto an analog cover signal according to claim 25, further comprising the step of modifying a parameter of said cover signal to produce a filtered cover signal for use in developing said cover modifying signal.

29. A method for embedding information symbols onto an analog cover signal according to claim 28, wherein said parameter comprises the frequency content of said cover signal.

**30.** A method for embedding information symbols onto an analog cover signal according to claim 28, wherein said parameter comprises the spatial content of said cover signal.

**31.** A method for embedding information symbols onto an analog cover signal according to claim 28, wherein said parameter comprises a temporal region of said cover signal.

**32.** A method for embedding information symbols onto an analog cover signal according to claim 28, wherein said parameter comprises a sampling rate of said cover signal.

**33.** A method for embedding information symbols onto an analog cover signal according to claim 24, wherein said analog cover signal is an audio signal.

**34.** A method for embedding information symbols onto an analog cover signal according to claim 24, wherein said analog cover signal is a video signal.

**35.** A method for embedding information symbols onto an analog cover signal according to claim 24, wherein said predefined relationship between said short-term autocorrelation function value and said auxiliary information symbol values varies as a function of predetermined values of auxiliary information symbols.

**36.** A method for embedding information symbols onto an analog cover signal according to claim 27, wherein the step of varying the gain comprises the step of varying the gain of said cover signal by a predetermined magnitude with a first polarity in a first half of an information symbol interval, and varying the gain of said cover signal in a second half of said information symbol interval by said predetermined magnitude with a second polarity opposite said first polarity.

**37.** A method for embedding information symbols onto an analog cover signal according to claim 24, wherein said cover modifying signal is comprised of a sum of a plurality of modifying signal components, each having a different amount of delay with respect to said cover signal.

**38.** A method for embedding information symbols onto an analog cover signal according to claim 25, wherein said cover modifying signal is delayed by a predetermined delay $\tau$ with respect to said cover signal.

**39.** A method for embedding information symbols onto an analog cover signal according to claim 38, wherein said predetermined delay $\tau$ varies as a function of time according to a predetermined delay pattern.

**40.** A method for extracting information symbols embedded onto an analog cover signal according to claim 9, wherein the step of calculating comprises the step of calculating a short-term autocorrelation function of said encoded cover signal;
the step of comparing comprises the step of determining the value of said generated autocorrelation function; and
the step of translating comprises the step of determining a value of an information symbol as a function of the value of said generated autocorrelation function and a predefined relationship between information symbol values and autocorrelation function values.

**41.** A method for extracting information symbols encoded onto an analog cover signal according to claim 40, wherein the step of calculating a short-term autocorrelation function of said encoded cover signal uses a delay $\tau$, and wherein the step of determining a value of an information symbol comprises the steps of:

calculating a short-term autocorrelation function with zero delay; and
calculating a normalized autocorrelation signal by dividing said autocorrelation function with delay $\tau$ by said autocorrelation function with zero delay.

**42.** A method for extracting information symbols encoded onto an analog cover signal according to claim 41, wherein said cover modifying signal is comprised of a sum of a plurality of modifying signal components, each having a different amount of delay with respect to said cover signal, and said step of determining a value of an information symbol comprises performing the steps of determining values for each of said plurality of modifying signal components.

**43.** A method for extracting information symbols embedded onto an analog cover signal according to claim 41, wherein said predetermined delay τ varies as a function of time according to a predetermined delay pattern.

44. Apparatus for embedding information symbols onto an analog cover signal (2) according to claim 21, wherein said means for calculating comprises means for determining a short-term autocorrelation function value of said cover signal, said apparatus further comprising:

means (11) for determining a value of an auxiliary information signal containing an information symbol;
means (11) for calculating a value of the short-term autocorrelation function of said cover signal corresponding to said determined value of said auxiliary information signal according to a predefined relationship between auxiliary information signal value and cover signal autocorrelation value;
means (11) for developing a cover modifying signal (8) for modifying said cover signal such that the short-term autocorrelation function value of the modified cover signal will correspond to said calculated value; and

wherein said means for modifying modifies said cover signal with said cover modifying signal.

45. Apparatus for extracting information symbols embedded onto an analog cover signal according to claim 23, wherein said means for calculating comprises means (21) for calculating a short-term autocorrelation function of said embedded cover signal and means for determining the value of said generated autocorrelation function; and
said means for translating comprises means (22) for determining a value of an information symbol as a function of the value of said generated autocorrelation function and a predefined relationship between information symbol values and autocorrelation function values.

46. A method for embedding information symbols onto an analog cover signal according to claim 1, wherein said step of calculating comprises the step of developing a cover modifying signal (8) for modifying said cover signal such that the short-term autocorrelation function value of the modified cover signal will correspond to said target quantization value; and
said step of modifying comprises modifying said cover signal with said cover modifying signal.

47. A method for embedding information symbols onto an analog cover signal according to claim 46, wherein said cover modifying signal is developed from said cover signal.

48. A method for embedding information symbols onto an analog cover signal according to claim 46, wherein the step of modifying said cover signal comprises the step of adding said cover modifying signal to said cover signal.

49. A method for embedding information symbols onto an analog cover signal according to- claim 47, wherein the step of developing comprises varying the gain of said cover signal as a function of a predefined relationship between gain and said auxiliary information signal.

50. A method for extracting information symbols encoded onto an analog cover signal according to claim 9, wherein said step of calculating comprises the step of calculating a short-term autocorrelation function of said encoded cover signal; and
said step of comparing comprises the step of determining a value of an information symbol as a function of the value of said generated autocorrelation function and a predefined relationship between information symbol values and autocorrelation function values.

**Patentansprüche**

1. Verfahren zum Einbetten eines Informationssymbols in einem analogen Abdecksignals (2), mit den folgenden Schritten:

Auswählen eines verteilten Signalmerkmals des Abdecksignals,
Berechnen eines Werts des ausgewählten verteilten Signalmerkmals des Abdecksignals über einen vordefinierten Bereich, und **gekennzeichnet durch** die folgenden Schritte:

Vergleichen des berechneten verteilten Signalmerkmalwertes mit einem vordefinierten Satz von Quantisierungswerten entsprechend gegebenen Informationssymbolen und Bestimmen eines Zielquantisierungswerts entsprechend dem Informationssymbol, das einzubetten ist,

Berechnen des Betrags an Änderung, der in dem Abdecksignal erforderlich ist, um das berechnete verteilte Signalmerkmal zu dem Zielquantifizierungswert zu modifizieren, und

Modifizieren des Abdecksignals entsprechend dem berechneten Betrag an Änderung **durch** Erzeugen einer modifizierten Version (8, 8a) des Abdecksignals in Übereinstimmung mit dem berechneten Betrag an Änderung und Einbetten der modifizierten Version des Abdecksignals in das ursprüngliche Abdecksignal, um ein modifiziertes Abdecksignal (4, 4a) bereitzustellen, in dem das Informationssignal eingebettet ist.

**2.** Verfahren nach Anspruch 1, bei dem der Schritt des Berechnens eines verteilten Signalmerkmals die Schritte des Bestimmens eines Bereichs des Abdecksignals, in dem das Informationssignal einzubetten ist, des Abgrenzens bzw. Isolierens des Bereichs des Abdecksignals und des Berechnens des Signalmerkmalwerts von dem isolierten Bereich umfasst.

**3.** Verfahren nach Anspruch 1, bei dem der vordefinierte Satz an Quantisierungswerten ein Mehrfaches an Quantisierungswerten für jedes definierte Informationssymbol enthält.

**4.** Verfahren nach Anspruch 1, bei dem der Schritt des Modifizierens des Abdecksignals den Schritt des Produzierens einer eingebetteten Signalkomponente (8a) entsprechend dem kalkulierten Betrag an Änderung zum Hinzufügen zu dem Abdecksignal umfasst.

**5.** Verfahren nach Anspruch 1, bei dem der vordefinierte Bereich ein ausgewähltes Intervall in dem Zeitbereich des Abdecksignals enthält.

**6.** Verfahren nach Anspruch 1, bei dem der vordefinierte Bereich ein ausgewähltes Frequenzband des Abdecksignals enthält.

**7.** Verfahren nach Anspruch 1, bei dem der Schritt des Modifizierens den Schritt des Änderns von zumindest einigen der Amplituden der Abdecksignalkomponenten innerhalb des vordefinierten Intervalls in Übereinstimmung mit dem berechneten Betrag an Änderung umfasst.

**8.** Verfahren nach Anspruch 1, bei dem der Schritt des Modifizierens den Schritt des Änderns der Amplituden aller Abdecksignalkomponenten innerhalb des vordefinierten Intervalls in Übereinstimmung mit dem berechneten Betrag an Änderung umfasst.

**9.** Verfahren zum Extrahieren eines Informationssymbols, das in einem analogen Abdecksignal eingebettet ist, mit folgenden Schritten:

Berechnen eines verteilten Signalmerkmalwerts des Abdecksignals über einen vordefinierten Bereich, und **gekennzeichnet durch** folgende Schritte:

Vergleichen des berechneten Signalmerkmalwerts mit einem vordefinierten Satz an Quantisierungswerten entsprechend den gegebenen Informationssymbolen und Bestimmen, welcher Quantisierungswert dem berechneten Signalmerkmalswert entspricht, und

Übersetzen bzw. Übertragen des vorbestimmten Quantisierungswerts in das Informationssymbol, das in dem Abdecksignal enthalten ist, und Ausgeben des Informationssymbols.

**10.** Verfahren nach Anspruch 9, bei dem der Schritt des Berechnens eines verteilten Signalmerkmals die Schritte des Bestimmens eines Bereichs des Abdecksignals, in dem das Informationssignal zu kodieren ist, des Isolierens des Bereichs des Abdecksignals und des Berechnens des Signalmerkmalwerts von dem isolierten Bereich umfasst.

**11.** Verfahren nach Anspruch 9, bei dem der vordefinierte Satz an Quantisierungswerten ein Mehrfaches an Quantisierungswerten für jedes definierte Informationssymbol enthält.

**12.** Verfahren nach Anspruch 9, bei dem der vordefinierte Bereich ein ausgewähltes Intervall in dem Zeitbereich des Abdecksignals enthält.

**13.** Verfahren nach Anspruch 9, bei dem der vordefinierte Bereich ein ausgewähltes Frequenzband des Abdecksignals enthält.

**14.** Vorrichtung zum Einbetten und Extrahieren von Informationssymbolen in einem analogen Abdecksignal (2), mit:

Mitteln (32) zum Berechnen eines verteilten Signalmerkmalwerts eines ausgewählten verteilten Signalmerkmals des Abdecksignals über einen vordefinierten Bereich, und **gekennzeichnet durch**:

Mittel (34) zum Vergleichen des berechneten verteilten Signalmerkmalwerts mit einem vordefinierten Satz an Quantisierungswerten entsprechend gegebenen Informationssymbolen und Bestimmen eines Zielquantisierungswerts entsprechend dem Informationssymbol, das einzubetten ist,
Mittel (34) zum Berechnen des Betrags an Änderung, der in dem Abdecksignal erforderlich ist, um das berechnete verteilte Signalmerkmal zu dem Zielquantisierungswert zu modifizieren,
Mittel (36, 12) zum Modifizieren des Abdecksignals entsprechend dem berechneten Betrag an Änderung **durch** Erzeugen einer modifizierten Version (8, 8a) des Abdecksignals in Übereinstimmung mit dem berechneten Betrag an Änderung und Einbetten der modifizierten Version des Abdecksignals in das ursprüngliche Abdecksignal, um ein modifiziertes Abdecksignal (4, 4a) bereitzustellen, in dem das Informationssymbol eingebettet ist,
Mittel (32a) zum Berechnen eines verteilten Signalmerkmalwerts des modifizierten Abdecksignals über einen vordefinierten Bereich,
Mittel (32a) zum Vergleichen des berechneten Signalmerkmalwerts des modifizierten Abdecksignals mit einem vordefinierten Satz an Quantisierungswerten entsprechend gegebenen Informationssymbolen und Bestimmen, welcher Quantisierungswert dem berechneten Signalmerkmalwert entspricht, und
Mittel (40) zum Übertragen bzw. Übersetzen des vorbestimmten Quantisierungswerts in das Informationssymbol, das in dem modifizierten Abdecksignal enthalten ist, und Ausgeben des Informationssymbols.

**15.** Vorrichtung nach Anspruch 14, bei der das Mittel (32) zum Berechnen eines verteilten Signalmerkmals Mittel zum Bestimmen eines Bereichs des Abdecksignals, in dem das Informationssignal zu kodieren ist, Mittel zum Isolieren des Bereichs des Abdecksignals und Mittel zum Berechnen des Signalmerkmals von dem isolierten Bereich umfasst.

**16.** Vorrichtung nach Anspruch 14, bei der der vordefinierte Satz an Quantisierungswerten ein Mehrfaches an Quantisierungswerten für jedes definierte Informationssymbol enthält.

**17.** Vorrichtung nach Anspruch 14, die weiterhin Mittel (36) zum Produzieren einer eingebetteten Signalkomponente zum Hinzufügen zu dem Abdecksignal aufweist, entsprechend dem berechneten Betrag an Änderung.

**18.** Vorrichtung nach Anspruch 14, bei der der vordefinierte Bereich ein ausgewähltes Intervall in dem Zeitbereich des Abdecksignals enthält.

**19.** Vorrichtung nach Anspruch 14, bei der der vordefinierte Bereich ein ausgewähltes Frequenzband des Abdecksignals enthält.

**20.** Vorrichtung nach Anspruch 14, bei der das Mittel (36) zum Modifizieren ein Mittel zum Ändern zumindest einiger der Amplituden von Abdecksignalkomponenten innerhalb des vordefinierten Bereichs in Übereinstimmung mit dem berechneten Betrag an Änderung umfasst.

**21.** Vorrichtung zum Einbetten eines Informationssymbols in einem analogen Abdecksignal (2) mit:

Mitteln (32) zum Berechnen eines verteilten Signalmerkmalwerts eines ausgewählten verteilten Signalmerkmals des Abdecksignals über einen vordefinierten Bereich, und **gekennzeichnet durch**:

Mittel (36, 12) zum Modifizieren des Abdecksignals **durch** Ändern zumindest einiger der Amplituden von Abdecksignalkomponenten innerhalb des vordefinierten Bereichs als eine Funktion des berechneten verteilten Signalmerkmalwerts, um ein modifiziertes Abdecksignal mit einem verteilten Signalmerkmalswert zu erhalten, in dem vordefinierten Bereich entsprechend dem Informationssymbol.

**22.** Vorrichtung nach Anspruch 21, die weiterhin aufweist:

Mittel (34) zum Vergleichen des berechneten Signalmerkmalwerts mit einem vordefinierten Satz an Quantisierungswerten entsprechend gegebenen Informationssymbolen und Bestimmen eines Zielquantisierungswerts entsprechend dem Informationssymbol, das einzubetten ist, und

Mittel (34) zum Berechnen des Betrags an Änderung, der in dem Abdecksignal erforderlich ist, um das berechnete Signalmerkmals zu dem Zielquantisierungswert zu modifizieren, wobei

das Mittel (36, 12) zum Modifizieren des Abdecksignals das Abdecksignal entsprechend dem berechneten Wert an Änderung modifiziert.

23. Vorrichtung zum Extrahieren eines Informationssymbols, das in einem analogen Abdecksignal eingebettet ist, mit:

Mitteln (32a) zum Berechnen eines verteilten Signalmerkmalwerts des Abdecksignals über einen vordefinierten Bereich, und **gekennzeichnet durch**:

Mittel (32a) zum Vergleichen des berechneten Signalmerkmalwerts mit einem vordefinierten Satz an Quantisierungswerten entsprechend gegebenen Informationssymbolen und Bestimmen, welcher Quantisierungswert dem berechneten Signalmerkmalswert entspricht, und
Mittel (40) zum Übertragen des bestimmten Quantisierungswerts in das Informationssymbol, das in dem Abdecksignal enthalten ist, und Ausgeben des Informationssymbols.

24. Verfahren zum Einbetten von Informationssymbolen auf einem analogen Abdecksignal entsprechend Anspruch 1, bei dem der Schritt des Berechnens eines verteilten Signalmerkmalwerts den Schritt des Bestimmens eines kurzzeitigen bzw. kurzfristigen Autokorrelationsfunktionswerts des Abdecksignals umfasst,
der Schritt des Vergleichens den Schritt des Berechnens eines Werts der kurzfristigen Autokorrelationsfunktion des Abdecksignals entsprechend dem Zielquantisierungswert des Informationssignals in Übereinstimmung mit einer vordefinierten Beziehung zwischen Informationssignalwert und Abdecksignalautokorrelationswert umfasst,
der Schritt des Berechnens den Schritt des Entwickelns eines Abdeckmodifizierungssignals umfasst, um das Abdecksignal derart zu modifizieren, dass der kurzfristige Autokorrelationsfunktionswert des modifizierten Abdecksignals dem berechneten Wert entsprechen wird, und,
der Schritte des Modifizierens den Schritt des Modifizierens des Abdecksignals mit dem Abdeckmodifizierungssignal umfasst.

25. Verfahren zum Einbetten von Informationssymbolen auf einem analogen Abdecksignal nach Anspruch 24, bei dem das Abdeckmodifizierungssignal (8) von dem Abdecksignal (2) entwickelt wird.

26. Verfahren zum Einbetten von Informationssymbolen auf einem analogen Abdecksignal nach Anspruch 24, bei dem der Schritt des Modifizierens des Abdecksignals den Schritt des Hinzufügens des Abdeckmodifizierungssignals zu dem Abdecksignal umfasst.

27. Verfahren zum Einbetten von Informationssymbolen auf einem analogen Abdecksignal nach Anspruch 25, bei dem der Schritt des Entwickelns den Schritt des Variierens der Verstärkung des Abdecksignals als eine Funktion der vordefinierten Beziehung und der Werte des Abdecksignals und des Hilfsinformationssignals (6) umfasst.

28. Verfahren zum Einbetten von Informationssymbolen auf einem analogen Abdecksignal nach Anspruch 25, das weiterhin den Schritt des Modifizierens eines Parameters des Abdecksignals umfasst, um ein gefiltertes Abdecksignal zur Verwendung beim Entwickeln des Abdeckmodifizierungssignals umfasst.

29. Verfahren zum Einbetten von Informationssymbolen auf einem analogen Abdecksignal nach Anspruch 28, bei dem der Parameter den Frequenzgehalt des Abdecksignals umfasst.

30. Verfahren zum Einbetten von Informationssymbolen auf einem analogen Abdecksignal nach Anspruch 28, bei dem der Parameter den Raumgehalt des Abdecksignals umfasst.

31. Verfahren zum Einbetten von Informationssymbolen auf einem analogen Abdecksignal nach Anspruch 28, bei dem der Parameter einen Zeitbereich des Abdecksignals umfasst.

32. Verfahren zum Einbetten von Informationssymbolen auf einem analogen Abdecksignal nach Anspruch 28, bei dem der Parameter eine Abtastrate des Abdecksignals umfasst.

33. Verfahren zum Einbetten von Informationssymbolen auf einem analogen Abdecksignal nach Anspruch 24, bei dem das analoge Abdecksignal ein Audiosignal ist.

**34.** Verfahren zum Einbetten von Informationssymbolen auf einem analogen Abdecksignal nach Anspruch 24, bei dem das analoge Abdecksignal ein Videosignal ist.

**35.** Verfahren zum Einbetten von Informationssymbolen auf einem analogen Abdecksignal nach Anspruch 24, bei dem die vordefinierte Beziehung zwischen dem kurzfristigen Autokorrelationsfunktionswerts und dem Hilfsinformationssymbolwerten als eine Funktion von vorbestimmten Werten von Hilfsinformationssymbolen variiert.

**36.** Verfahren zum Einbetten von Informationssymbolen auf einem analogen Abdecksignal nach Anspruch 27, bei dem der Schritt des Variierens der Verstärkung den Schritt des Variierens der Verstärkung des Abdecksignals um eine vorbestimmte Größe mit einer ersten Polarität in einer ersten Hälfte eines Informationssymbolintervalls und des Variierens der Verstärkung des Abdecksignals in einer zweiten Hälfte des Informationssymbolintervalls um die vorbestimmte Größe mit einer zweiten Polarität entgegengesetzt der ersten Polarität umfasst.

**37.** Verfahren zum Einbetten von Informationssymbolen auf einem analogen Abdecksignal nach Anspruch 24, bei dem das Abdeckmodifizierungssignal aus einer Summe einer Mehrzahl von modifizierenden Signalkomponenten besteht, die jeweils einen verschiedenen Betrag einer Verzögerung bezüglich des Abdecksignals haben.

**38.** Verfahren zum Einbetten von Informationssymbolen auf einem analogen Abdecksignal nach Anspruch 25, bei dem das Abdeckmodifizierungssignal um eine vorbestimmte Verzögerung $\tau$ bezüglich des Abdecksignals ist.

**39.** Verfahren zum Einbetten von Informationssymbolen auf einem analogen Abdecksignal nach Anspruch 38, bei dem die vorbestimmte Verzögerung $\tau$ als eine Funktion einer Zeit entsprechend einem vorbestimmten Verzögerungsmuster variiert.

**40.** Verfahren zum Extrahieren von Informationssymbolen, die auf einem analogen Abdecksignal nach Anspruch 9 eingebettet sind, wobei der Schritt des Berechnens den Schritt des Berechnens einer kurzfristigen Autokorrelationsfunktion des kodierten Abdecksignals umfasst,
der Schritt des Vergleichens den Schritt des Bestimmens des Werts der erzeugten Autokorrelationsfunktion umfasst, und
der Schritt des Übertragens den Schritt des Bestimmens eines Werts eines Informationssymbols als eine Funktion des Werts der erzeugten Autokorrelationsfunktion und einer vordefinierten Beziehung zwischen Informationssymbolwerten und Autokorrelationsfunktionswerten umfasst.

**41.** Verfahren zum Extrahieren von Informationssymbolen, die auf einem analogen Abdecksignal codiert sind, nach Anspruch 40, wobei der Schritt des Berechnens einer kurzfristigen Autokorrelationsfunktion des kodierten Abdecksignals eine Verzögerung $\tau$ verwendet, und wobei der Schritt des Bestimmens eines Werts eines Informationssymbols die Schritte umfasst:

Berechnen einer kurzfristigen Autokorrelationsfunktion mit Null-Verzögerung, und
Berechnen eines normalisierten Autokorrelationssignals durch Teilen der Autokorrelationsfunktion mit der Verzögerung $\tau$ durch die Autokorrelationsfunktion mit Null-Verzögerung.

**42.** Verfahren zum Extrahieren von Informationssymbolen, die auf einem analogen Abdecksignal codiert sind, nach Anspruch 41, wobei das Abdeckmodifizierungssignal aus einer Summe einer Mehrzahl von modifizierenden Signalkomponenten besteht, die jeweils einen verschiedenen Betrag einer Verzögerung bezüglich des Abdecksignals haben, und der Schritt des Bestimmens eines Werts eines Informationssymbols den Schritt des Durchführens der Schritte des Bestimmens von Werten für jede der Mehrzahl von modifizierenden Signalkomponenten umfasst.

**43.** Verfahren zum Extrahieren von Informationssymbolen, die auf einem analogen Abdecksignal eingebettet sind, nach Anspruch 41, bei dem die vorbestimmte Verzögerung $\tau$ als eine Funktion einer Zeit in Übereinstimmung mit einem vorbestimmten Verzögerungsmuster variiert.

**44.** Vorrichtung zum Einbetten von Informationssymbolen auf einem analogen Abdecksignal (2) nach Anspruch 21, bei dem das Mittel zum Berechnen Mittel zum Bestimmen eines kurzfristigen Autokorrelationsfunktionswerts des Abdecksignals umfasst, wobei die Vorrichtung weiterhin aufweist:

Mittel (11) zum Bestimmen eines Werts eines Hilfsinformationssignals, das ein Informationssymbol enthält,
Mittel (11) zum Berechnen eines Werts der kurzfristigen Autokorrelationsfunktion des Abdecksignals entsprechend dem bestimmten Wert des Hilfsinformationssignals in Übereinstimmung mit einer vordefinierten Beziehung zwischen Hilfsinformationssignalwert und Abdecksignalkorrelationswert,
Mittel (11) zum Entwickeln eines Abdeckmodifizierungssignals (8) zum Modifizieren des Abdecksignals, so dass der kurzfristige Autokorrelationsfunktionswert des modifizierten Abdecksignals dem berechneten Wert entsprechen wird, und

wobei das Mittel zum Modifizieren das Abdecksignal mit dem Abdeckmodifizierungssignal modifiziert.

45. Vorrichtung zum Extrahieren von Informationssymbolen, die auf einem analogen Abdecksignal eingebettet sind, nach Anspruch 23, bei dem das Mittel zum Berechnen Mittel (21) zum Berechnen einer kurzfristigen Autokorrelationsfunktion des eingebetteten Abdecksignals und Mittel zum Bestimmen des Werts der erzeugten Autokorrelationsfunktion umfasst, und
das Mittel zum Übertragen Mittel (22) zum Bestimmen eines Werts eines Informationssymbols als eine Funktion des Werts der erzeugten Autokorrelationsfunktion und einer vordefinierten Beziehung zwischen Informationssymbolwerten und Autokorrelationsfunktionswerten umfasst.

46. Verfahren zum Einbetten von Informationssymbolen auf einem analogen Abdecksignal nach Anspruch 1, bei dem der Schritt des Berechnens den Schritt des Entwickelns eines Abdeckmodifizierungssignals (8) zum Modifizieren des Abdecksignals umfasst, so dass der kurzfristige Autokorrelationsfunktionswert des modifizierten Abdecksignals dem Zielquantisierungswert entsprechend wird, und
der Schritt des Modifizierens den Schritt des Modifizierens des Abdecksignals mit dem Abdeckmodifizierungssignal umfasst.

47. Verfahren zum Einbetten von Informationssymbolen auf einem analogen Abdecksignal nach Anspruch 46, bei dem das Abdeckmodifizierungssignal von dem Abdecksignal entwickelt wird.

48. Verfahren zum Einbetten von Informationssymbolen auf einem analogen Abdecksignal nach Anspruch 46, bei dem der Schritt des Modifizierens des Abdecksignals den Schritt des Hinzufügens des Abdeckmodifizierungssignals zu dem Abdecksignal umfasst.

49. Verfahren zum Einbetten von Informationssymbolen auf einem analogen Abdecksignal nach Anspruch 47, bei dem der Schritt des Entwickelns den Schritt des Variierens der Verstärkung des Abdecksignals als eine Funktion einer vordefinierten Beziehung zwischen Verstärkung und dem Hilfsinformationssignal umfasst.

50. Verfahren zum Extrahieren von Informationssymbolen, die auf einem analogen Abdecksignal kodiert sind, nach Anspruch 9, bei dem der Schritt des Berechnens den Schritt des Berechnens einer kurzfristigen Autokorrelationsfunktion des kodierten Abdecksignals umfasst, und
der Schritt des Vergleichens den Schritt des Bestimmens eines Werts eines Informationssymbols als eine Funktion des Werts der erzeugten Autokorrelationsfunktion und einer vordefinierten Beziehung zwischen Informationssymbolwerten und Autokorrelationsfunktionswerten umfasst.

**Revendications**

1. Procédé d'intégration d'un symbole d'information dans un signal analogique de couverture (2), comprenant les étapes consistant à :

sélectionner une caractéristique de signal distribuée dudit signal de couverture ;
calculer une valeur de ladite caractéristique de signal distribuée sélectionnée dudit signal de couverture sur une région prédéfinie ; et **caractérisé en ce qu'**il comprend les étapes consistant à :

comparer la valeur de caractéristique de signal distribuée calculée avec un ensemble prédéfini de valeurs de quantification correspondant à des symboles d'information donnés et déterminer une valeur de quantification cible correspondant au symbole d'information à intégrer ;
calculer la quantité de changement nécessaire au sein du signal de couverture afin de modifier ladite caractéristique de signal distribuée calculée en dite valeur de quantification cible ; et
modifier ledit signal de couverture selon ladite quantité calculée de changement en générant une version modifiée (8 ; 8a) dudit signal de couverture selon ladite quantité calculée de changement, et intégrer ladite version modifiée dudit signal de couverture dans le signal de couverture d'origine afin de fournir un signal de couverture modifié (4 ; 4a) possédant ledit symbole d'information intégré à l'intérieur.

2. Procédé selon la revendication 1, dans lequel l'étape de calcul d'une caractéristique de signal distribuée comprend les étapes de détermination d'une région dudit signal de couverture dans laquelle ledit symbole d'information doit être intégré, d'isolation de ladite région dudit signal de couverture, et de calcul de ladite valeur de caractéristique de signal à partir de ladite région isolée.

3. Procédé selon la revendication 1, dans lequel ledit ensemble prédéfini de valeurs de quantification contient une multiplicité de valeurs de quantification pour chaque symbole d'information défini.

4. Procédé selon la revendication 1, dans lequel l'étape de modification dudit signal de couverture comprend l'étape de production d'une composante de signal intégrée (8a) selon ladite quantité calculée de changement pour l'ajout audit signal de couverture.

5. Procédé selon la revendication 1, dans lequel ladite région prédéfinie contient un intervalle sélectionné dans le domaine temporel du signal de couverture.

6. Procédé selon la revendication 1, dans lequel ladite région prédéfinie contient une bande de fréquences sélectionnée du signal de couverture.

7. Procédé selon la revendication 1, dans lequel l'étape de modification comprend l'étape de modification d'au moins certaines des amplitudes des composantes du signal de couverture dans ledit intervalle prédéfini selon ladite quantité de changement calculée.

8. Procédé selon la revendication 1, dans lequel l'étape de modification comprend l'étape de modification des amplitudes de l'ensemble des composantes du signal de couverture dans ledit intervalle prédéfini selon ladite quantité calculée de changement.

9. Procédé d'extraction d'un symbole d'information intégré dans un signal analogique de couverture, comprenant les étapes consistant à :

calculer une valeur de caractéristique de signal distribuée dudit signal de couverture sur une région prédéfinie ; et

**caractérisé en ce qu'**il comprend les étapes consistant à :

comparer la valeur de caractéristique de signal calculée avec un ensemble prédéfini de valeurs de quantification correspondant à des symboles d'information donnés et déterminer quelle valeur de quantification correspond à la valeur de caractéristique de signal calculée ; et
traduire ladite valeur de quantification déterminée en symbole d'information contenu dans ledit signal de couverture et transmettre ledit symbole d'information.

10. Procédé selon la revendication 9, dans lequel l'étape de calcul d'une caractéristique de signal distribuée comprend les étapes de détermination d'une région dudit signal de couverture dans laquelle ledit symbole d'information doit être encodé, d'isolation de ladite région dudit signal de couverture, et de calcul de ladite valeur de caractéristique dé signal à partir de ladite région isolée.

11. Procédé selon la revendication 9, dans lequel ledit ensemble prédéfini de valeurs de quantification contient une multiplicité de valeurs de quantification pour chaque symbole d'information défini.

12. Procédé selon la revendication 9, dans lequel ladite région prédéfinie contient un intervalle sélectionné dans le domaine temporel du signal de couverture.

13. Procédé selon la revendication 9, dans lequel ladite région prédéfinie contient une bande de fréquences sélectionnée du signal de couverture.

14. Appareil d'intégration et d'extraction de symboles d'information dans un signal analogique de couverture (2), comprenant :

un moyen (32) permettant de calculer une valeur de caractéristique de signal distribuée d'une caractéristique de signal distribuée sélectionnée dudit signal de couverture sur une région prédéfinie ; et

**caractérisé en ce qu'**il comprend :

un moyen (34) permettant de comparer la valeur de caractéristique de signal distribuée calculée avec un ensemble prédéfini de valeurs de quantification correspondant à des symboles d'information donnés, et de déterminer une valeur de quantification cible correspondant au symbole d'information à intégrer ;
un moyen (34) permettant de calculer la quantité de changement nécessaire dans le signal de couverture afin de modifier ladite caractéristique de signal distribuée calculée en ladite valeur de quantification cible ;
un moyen (36, 12) permettant de modifier ledit signal de couverture selon ladite quantité calculée de changement en générant une version modifiée (8 ; 8a) dudit signal de couverture selon ladite quantité calculée de changement, et d'intégrer ladite version modifiée dudit signal de couverture dans le signal de couverture d'origine afin de fournir un signal de couverture modifié (4 ; 4a) possédant ledit symbole d'information intégré à l'intérieur ;
un moyen (32a) permettant de calculer une valeur de caractéristique de signal distribuée dudit signal de couverture sur une région prédéfinie ;
un moyen (32a) permettant de comparer la valeur de caractéristique de signal calculée dudit signal de couverture modifié avec un ensemble prédéfini de valeurs de quantification correspondant à des symboles d'information donnés, et de déterminer quelle valeur de quantification correspond à la valeur caractéristique de signal calculée ; et
un moyen (40) permettant de traduire ladite valeur de quantification déterminée en symbole d'information contenu dans ledit signal de couverture modifié, et de transmettre ledit symbole d'information.

15. Appareil selon la revendication 14, dans lequel ledit moyen (32) permettant de calculer une caractéristique de signal distribuée comprend un moyen permettant de déterminer une région dudit signal de couverture dans laquelle ledit symbole d'information doit être encodé, un moyen permettant d'isoler ladite région dudit signal de couverture, et un moyen permettant de calculer ladite caractéristique de signal à partir de ladite région isolée.

16. Appareil selon la revendication 14, dans lequel ledit ensemble prédéfini de valeurs de quantification contient une multiplicité de valeurs de quantification pour chaque symbole d'information défini.

17. Appareil selon la revendication 14, comprenant en outre un moyen (36) permettant de produire une composante de signal intégrée destinée à être ajoutée audit signal de couverture, selon la quantité calculée de changement.

18. Appareil selon la revendication 14, dans lequel ladite région prédéfinie contient un intervalle sélectionné dans le domaine temporel du signal de couverture.

19. Appareil selon la revendication 14, dans lequel ladite région prédéfinie contient une bande de fréquences sélectionnée du signal de couverture.

20. Appareil selon la revendication 14, dans lequel ledit moyen (36) de modification comprend un moyen permettant de modifier au moins certaines des amplitudes des composantes de signal de couverture dans ladite région prédéfinie, selon ladite quantité calculée de changement.

21. Appareil d'intégration d'un symbole d'information dans un signal analogique de couverture (2), comprenant :

un moyen (32) permettant de calculer une valeur de caractéristique de signal distribuée d'une caractéristique de signal distribuée sélectionnée dudit signal de couverture sur une région prédéfinie ; et

**caractérisé en ce qu'**il comprend :

un moyen (36, 12) permettant de modifier ledit signal de couverture en modifiant au moins certaines des amplitudes des composantes du signal de couverture dans ladite région prédéfinie en fonction de ladite valeur de caractéristique de signal distribuée calculée de façon à obtenir un signal de couverture modifié possédant une valeur de caractéristique de signal distribuée dans ladite région prédéfinie correspondant audit symbole d'information.

22. Appareil selon la revendication 21, comprenant en outre :

un moyen (34) permettant de comparer la valeur de caractéristique de signal calculée avec un ensemble prédéfini de valeurs de quantification correspondant à des symboles d'information donnés, et de déterminer une valeur de quantification cible correspondant au symbole d'information à intégrer ; et

un moyen (34) permettant de calculer la quantité de changement nécessaire dans le signal de couverture afin de modifier ladite caractéristique de signal calculée en ladite valeur de quantification cible ;

dans lequel
ledit moyen (36, 12) permettant de modifier ledit signal de couverture modifie ledit signal de couverture selon ladite quantité de changement calculée.

**23.** Appareil d'extraction d'un symbole d'information intégré dans un signal analogique de couverture, comprenant :

un moyen (32a) permettant de calculer une valeur de caractéristique de signal distribuée dudit signal de couverture sur une région prédéfinie ; et **caractérisé en ce qu'**il comprend :

un moyen (32a) permettant de comparer la valeur de caractéristique de signal calculée avec un ensemble prédéfini de valeurs de quantification correspondant à des symboles d'information donnés et de déterminer quelle valeur de quantification correspond à la valeur de caractéristique de signal calculée ; et

un moyen (40) permettant de traduire ladite valeur de quantification déterminée en symbole d'information contenu dans ledit signal de couverture, et de transmettre ledit symbole d'information.

**24.** Procédé d'intégration de symboles d'information dans un signal analogique de couverture selon la revendication 1, dans lequel l'étape de calcul d'une valeur de caractéristique de signal distribuée comprend l'étape de détermination d'une valeur de fonction d'auto-corrélation à court terme dudit signal de couverture ;

ladite étape de comparaison comprend l'étape de calcul d'une valeur de la fonction d'auto-corrélation à court terme dudit signal de couverture correspondant à ladite valeur de quantification cible dudit signal d'information selon une relation prédéfinie entre la valeur du signal d'information et la valeur d'auto-corrélation du signal de couverture ;

ladite étape de calcul comprend l'étape de développement d'un signal de modification de couverture destiné à modifier ledit signal de couverture de telle sorte que la valeur de fonction d'auto-corrélation à court terme du signal de couverture modifié corresponde à ladite valeur calculée ; et

ladite étape de modification comprend l'étape de modification dudit signal de couverture avec ledit signal de modification de couverture.

**25.** Procédé d'intégration de symboles d'information dans un signal analogique de couverture selon la revendication 24, dans lequel ledit signal de modification de couverture (8) est développé à partir dudit signal de couverture (2).

**26.** Procédé d'intégration de symboles d'information dans un signal analogique de couverture selon la revendication 24, dans lequel l'étape de modification dudit signal de couverture comprend l'étape d'ajout dudit signal de modification de couverture audit signal de couverture.

**27.** Procédé d'intégration de symboles d'information dans un signal analogique de couverture selon la revendication 25, dans lequel l'étape de développement comprend la variation du gain dudit signal de couverture en fonction de ladite relation prédéfinie et des valeurs dudit signal de couverture et dudit signal d'information auxiliaire (6).

**28.** Procédé d'intégration de symboles d'information dans un signal analogique de couverture selon la revendication 25, comprenant en outre l'étape de modification d'un paramètre dudit signal de couverture afin de produire un signal de couverture filtré destiné à être utilisé lors du développement dudit signal de modification de couverture.

**29.** Procédé d'intégration de symboles d'information dans un signal analogique de couverture selon la revendication 28, dans lequel ledit paramètre comprend la teneur en fréquences dudit signal de couverture.

**30.** Procédé d'intégration de symboles d'information dans un signal analogique de couverture selon la revendication 28, dans lequel ledit paramètre comprend la teneur spatiale dudit signal de couverture.

**31.** Procédé d'intégration de symboles d'information dans un signal analogique de couverture selon la revendication 28, dans lequel ledit paramètre comprend une région temporelle dudit signal de couverture.

**32.** Procédé d'intégration de symboles d'information dans un signal analogique de couverture selon la revendication 28, dans lequel ledit paramètre comprend une vitesse d'échantillonnage dudit signal de couverture.

33. Procédé d'intégration de symboles d'information dans un signal analogique de couverture selon la revendication 24, dans lequel ledit signal analogique de couverture est un signal audio.

34. Procédé d'intégration de symboles d'information dans un signal analogique de couverture selon la revendication 24, dans lequel ledit signal analogique de couverture est un signal vidéo.

35. Procédé d'intégration de symboles d'information dans un signal analogique de couverture selon la revendication 24, dans lequel ladite relation prédéfinie entre ladite valeur de fonction d'auto-corrélation à court terme et lesdites valeurs de symboles d'information auxiliaires varie en fonction de valeurs prédéterminées des symboles d'information auxiliaires.

36. Procédé d'intégration de symboles d'information dans un signal analogique de couverture selon la revendication 27, dans lequel l'étape de variation du gain comprend l'étape de variation du gain dudit signal de couverture selon une magnitude prédéterminée avec une première polarité dans une première moitié d'un intervalle du symbole d'information, et de variation du gain dudit signal de couverture dans une seconde moitié d'un intervalle dudit symbole d'information selon ladite magnitude prédéterminée avec une seconde polarité opposée à ladite première polarité.

37. Procédé d'intégration de symboles d'information dans un signal analogique de couverture selon la revendication 24, dans lequel ledit signal de modification de couverture est constitué d'une somme d'une pluralité de composantes de signal de modification, possédant chacune une quantité différente de retard par rapport audit signal de couverture.

38. Procédé d'intégration de symboles d'information dans un signal analogique de couverture selon la revendication 25, dans lequel ledit signal de modification de couverture est retardé par un retard prédéterminé $\tau$ par rapport audit signal de couverture.

39. Procédé d'intégration de symboles d'information dans un signal analogique de couverture selon la revendication 38, dans lequel ledit retard prédéterminé $\tau$ varie en fonction du temps selon un modèle de retard prédéterminé.

40. Procédé d'intégration de symboles d'information dans un signal analogique de couverture selon la revendication 9, dans lequel l'étape de calcul comprend l'étape de calcul d'une fonction d'auto-corrélation à court terme dudit signal de couverture encodé ;
l'étape de comparaison comprend l'étape de détermination de la valeur de ladite fonction d'auto-corrélation générée ; et
l'étape de traduction comprend l'étape de détermination d'une valeur d'un symbole d'information comme étant une fonction de la valeur de ladite fonction d'auto-corrélation générée et d'une relation prédéfinie entre les valeurs du symbole d'information et les valeurs de la fonction d'auto-corrélation.

41. Procédé d'extraction de symboles d'information encodés dans un signal analogique de couverture selon la revendication 40, dans lequel l'étape de calcul d'une fonction d'auto-corrélation à court terme dudit signal de couverture encodé utilise un retard $\tau$, et dans lequel l'étape de détermination d'une valeur d'un symbole d'information comprend les étapes consistant à :

calculer une fonction d'auto-corrélation à court terme à un retard nul ; et
calculer un signal d'auto-corrélation normalisé en divisant ladite fonction d'auto-corrélation avec le retard $\tau$ par ladite fonction d'auto-corrélation avec le retard nul.

42. Procédé d'extraction de symboles d'information encodés dans un signal analogique de couverture selon la revendication 41, dans lequel ledit signal de modification de couverture est constitué d'une somme d'une pluralité de composantes de signal de modification, possédant chacune une quantité différente de retard par rapport audit signal de couverture, et ladite étape de détermination d'une valeur d'un symbole d'information comprend la réalisation des étapes de détermination de valeurs pour chacune de ladite pluralité de composantes de signal de modification.

43. Procédé d'extraction de symboles d'information encodés dans un signal analogique de couverture selon la revendication 41, dans lequel ledit retard prédéterminé $\tau$ varie en fonction du temps selon un modèle de retard prédéterminé.

**44.** Appareil d'intégration de symboles d'information dans un signal analogique de couverture (2) selon la revendication 21, dans lequel ledit moyen de calcul comprend un moyen permettant de déterminer une valeur de fonction d'auto-corrélation à court terme dudit signal de couverture, ledit appareil comprenant en outre :

un moyen (11) permettant de déterminer une valeur d'un signal d'information auxiliaire contenant un symbole d'information ;

un moyen (11) permettant de calculer une valeur de la fonction d'auto-corrélation à court terme dudit signal de couverture correspondant à ladite valeur prédéterminée dudit signal d'information auxiliaire selon une relation prédéfinie entre la valeur du signal d'information auxiliaire et la valeur d'auto-corrélation du signal de couverture ;

un moyen (11) permettant de développer un signal de modification de couverture (8) afin de modifier ledit signal de couverture de telle sorte que la valeur de la fonction d'auto-corrélation à court terme du signal de couverture modifié corresponde à ladite valeur calculée ; et

dans lequel ledit moyen de modification modifie ledit signal de couverture avec ledit signal de modification de couverture.

**45.** Appareil d'extraction de symboles d'information intégrés dans un signal analogique de couverture selon la revendication 23, dans lequel ledit moyen de calcul comprend un moyen (21) permettant de calculer une fonction d'auto-corrélation à court terme dudit signal de couverture intégré et un moyen permettant de déterminer la valeur de ladite fonction d'auto-corrélation générée ; et

ledit moyen de traduction comprend un moyen (22) permettant de déterminer une valeur d'un symbole d'information comme étant une fonction de la valeur de ladite fonction d'auto-corrélation générée et d'une relation prédéfinie entre les valeurs du symbole d'information et la valeurs de la fonction d'auto-corrélation.

**46.** Procédé d'intégration de symboles d'information dans un signal analogique de couverture selon la revendication 1, dans lequel ladite étape de calcul comprend l'étape de développement d'un signal de modification de couverture (8) afin de modifier ledit signal de couverture de telle sorte que la valeur de la fonction d'auto-corrélation à court terme du signal de couverture modifié corresponde à ladite valeur de quantification cible ; et

ladite étape de modification comprend la modification dudit signal de couverture avec ledit signal de modification de couverture.

**47.** Procédé d'intégration de symboles d'information dans un signal analogique de couverture selon la revendication 46, dans lequel ledit signal de modification de couverture est développé à partir dudit signal de couverture.

**48.** Procédé d'intégration de symboles d'information dans un signal analogique de couverture selon la revendication 46, dans lequel l'étape de modification dudit signal de couverture comprend l'étape d'ajout dudit signal de modification de couverture audit signal de couverture.

**49.** Procédé d'intégration de symboles d'information dans un signal analogique de couverture selon la revendication 47, dans lequel l'étape de développement comprend la variation du gain dudit signal de couverture en fonction d'une relation prédéfinie entre le gain et ledit signal d'information auxiliaire.

**50.** Procédé d'extraction de symboles d'information encodés dans un signal analogique de couverture selon la revendication 9, dans lequel ladite étape de calcul comprend l'étape de calcul d'une fonction d'auto-corrélation à court terme dudit signal de couverture encodé ; et

ladite étape de comparaison comprend l'étape de détermination d'une valeur d'un symbole d'information comme étant une fonction de la valeur de ladite fonction d'auto-corrélation générée et d'une relation prédéfinie entre les valeurs du symbole d'information et les valeurs de la fonction d'auto-corrélation.

# FIG.1

Host Signal —2→ [Encoder 10] —4→ Encoded Signal - - - → Encoded Signal (Received) —4→ [Decoder 20] —6→ Auxiliary Signal (s)

Transmission Medium

Auxiliary Signal(s) —6→

# FIG.2

Host Signal —2→ ⊕ 12 —4→ Encoded Signal

Host Modifying Signal Generator 11

Host Modifying Signal —8

Auxiliary Signal —6

# FIG.3

Host Signal — 2 → [ Filter / Mask (110) ] — Filter / Masked Signal (3) → [ Host Modifying Signal Component Generator (111) ] — 8 → Host Modifying Signal

Auxiliary Signal — 6 →

# FIG.4

Filtered / Masked Signal — 3 → [ Delay or Advance (1110) ] — 3a → [ Variable Gain or Attenuation (1113) ] — 8 → Host Modifying Signal Component

[ Gain Calculator (1112) ]

Auxiliary Signal — 6 →

# FIG.5

# FIG.6

# FIG.7

EP 1 002 388 B1

# FIG.8

Encoded Signal — 4 → **Short - term Autocorrelation Generator 1** (21a) — Autocorrelation Signal 1 → **Auxiliary Signal Extraction** (22) — 6 → Auxiliary Signal

**Short - term Autocorrelation Generator 2** (21b) — Autocorrelation Signal 2

. . . .

**Short - term Autocorrelation Generator N** (21n) — Autocorrelation Signal N

# FIG.9

Stego Key

9

2

Cover
Signal → Embeddor → Stego Signal — · — · — · — · — Stego Signal

10a

6

4a

Digital
Data

Transmission
Medium

Stego Key

9

20a

Extractor → Digital Data

4a

6a

# FIG.10

12    4a

Cover
Signal

2

Stego Signal

Stego Key    9

11a

Embedded
Signal
Generator

Embedded
Signal
Component

8a

10a

6

Digital
Data

# FIG.11

# FIG.12

# FIG.13

| frequency band | 5000Hz - 6000Hz |
|---|---|
| time intervals | $T = 20$ -ms, sequential |
| distributed signal feature i- th symbol, $i = 1, 2, \ldots$ | $\dfrac{I_{1,i} - I_{2,i}}{I_{1,i} + I_{2,i}}$ , $I_{1,i} = \displaystyle\int_{(i-1)T}^{(i-0.5)T} s^2(t)\,dt$, $I_{2,i} = \displaystyle\int_{(i-0.5)T}^{iT} s^2(t)\,dt$ |
| quantization grid, binary symbols | Symbol 1 : $Q_1 = -0.9, -0.5, -0.1, 0.3, 0.7$<br>Symbol 0 : $Q_0 = -0.7, -0.3, 0.1, 0.5, 0.9$ |

EP 1 002 388 B1